# EUROPEAN PATENT SPECIFICATION

(11) **EP 3 126 035 B1**
(45) Date of publication and mention of the grant of the patent: **16.10.2019**
(21) Application number: 15716569.7
(22) Date of filing: 01.04.2015
(51) Int. Cl.: B01D 53/94

(54) **DIESEL OXIDATION CATALYST WITH NOX ADSORBER ACTIVITY**
DIESELOXIDATIONSKATALYSATOR MIT NOX-ADSORBER-AKTIVITÄT
CATALYSEUR D'OXYDATION DIESEL AYANT UNE ACTIVITÉ D'ADSORPTION DES NOX

(30) Priority: 01.04.2014 GB 201405868; 23.01.2015 GB 201501119
(43) Date of publication of application: 08.02.2017
(60) Divisional application: 19195388.4
(73) Proprietor: Johnson Matthey Public Limited Company, London EC4A 4AB (GB)
(72) Inventor: CHIFFEY, Andrew Francis, Ware Hertfordshire SG12 9LB (GB); PHILLIPS, Paul Richard, Royston Hertfordshire SG8 5YR (GB); MOREAU, Francois, Cambridge Cambridgeshire CB1 3PX (GB); DALY, Christopher, Royston Hertfordshire SG8 5HE (GB); O'BRIEN, Matthew, Royston Hertfordshire SG8 5HE (GB)
(74) Representative: Lenden, Philip
(86) International application number: PCT/GB2015/051015
(87) International publication number: WO 2015/150805

(56) References cited:
- EP-A2- 0 935 055
- WO-A1-2012/166868
- US-A1- 2014 038 814
- US-B1- 8 449 852
- US-B1- 8 568 674

## Description

### FIELD OF THE INVENTION

The invention relates to an oxidation catalyst for a diesel engine and to an exhaust system for a diesel engine comprising the oxidation catalyst.

### BACKGROUND TO THE INVENTION

Diesel engines produce an exhaust emission that generally contains at least four classes of pollutant that are legislated against by inter-governmental organisations throughout the world: carbon monoxide (CO), unburned hydrocarbons (HCs), oxides of nitrogen (NOₓ) and particulate matter (PM).

Oxidation catalysts, such as diesel oxidation catalysts (DOCs), are typically used to oxidise carbon monoxide (CO) and hydrocarbons (HCs) in an exhaust gas produced by a diesel engine. Diesel oxidation catalysts can also oxidise some of the nitric oxide (NO) that is present in the exhaust gas to nitrogen dioxide (NO₂).

Oxidation catalysts and other types of emissions control device typically achieve high efficiencies for treating or removing pollutants once they have reached their effective operating temperature. However, these catalysts or devices can be relatively inefficient below their effective operating temperature, such as when the engine has been started from cold (the "cold start" period) or has been idling for a prolonged period. As emissions standards for diesel engines, whether stationary or mobile (e.g. vehicular diesel engines), are being progressively tightened, there is a need to reduce the level of emissions produced during the cold start period.

WO 2012/166868 describes a cold start catalyst and its use in exhaust systems. The cold start catalyst comprises a zeolite catalyst and a supported platinum group metal catalyst. The zeolite catalyst comprises a base metal, a noble metal, and a zeolite.

US 2014/0038814 A1 describes a method of making a supported catalytic species comprising an alloy of at least two metals, where each metal is independently selected from the group consisting of gold, palladium, platinum, rhodium, iridium, silver, osmium and ruthenium.

US 8,449,852 describes diesel oxidation catalysts comprising a first washcoat layer including a platinum group metal impregnated on a promoted non-zeolitic support. The promoter is one or more of tin, manganese, indium, or group VIII metals.

EP 0935055 A2 describes a device that includes a NOₓ-adsorbing-and-reducing catalyst that is capable of adsorbing NOₓ and accelerating a reduction of the adsorbed NOₓ into N₂.

US 8,568,674 describes oxidation catalyst composites for the treatment of exhaust gas emissions. The catalyst composites comprise two washcoat layers containing two different compositions of platinum group metals to optimize the NO₂ exiting the catalyst composite.

Exhaust systems for diesel engines may include several emissions control devices. Each emissions control device has a specialised function and is responsible for treating one or more classes of pollutant in the exhaust gas. The performance of an upstream emissions control device can affect the performance of a downstream emissions control device. This is because the exhaust gas from the outlet of the upstream emissions control device is passed into the inlet of the downstream emissions control device. The interaction between each emissions control device in the exhaust system is important to the overall efficiency of the system.

Even though nitrogen dioxide (NO₂) is itself a pollutant, the conversion of NO into NO₂ by an oxidation catalyst can be beneficial. The NO₂ that is produced can be used to regenerate particulate matter (PM) that has been trapped by, for example, a downstream diesel particulate filter (DPF) or a downstream catalysed soot filter (CSF). It can also be used to ensure optimum performance of a downstream SCR or SCRF™ catalyst because the ratio of NO₂:NO in the exhaust gas produced directly by a diesel engine can be too low for such performance.

### SUMMARY OF THE INVENTION

The oxidation catalyst of the invention is able to adsorb NOₓ at relatively low exhaust gas temperatures (e.g. less than 200 °C), such as during the cold start period of an engine. At higher exhaust gas temperatures, when the oxidation catalyst is at its effective temperature, the adsorbed NOₓ is released and nitric oxide (NO) is oxidised by the catalyst to nitrogen dioxide (NO₂) for treatment by a downstream emissions control device. The oxidation catalyst may also be able to adsorb hydrocarbons (HCs) at relatively low temperatures, and then release and oxidise any adsorbed HCs at higher temperatures. The oxidation catalyst also has good activity toward oxidising carbon monoxide (CO) and hydrocarbons (HCs) in an exhaust gas produced by a diesel engine.

The invention provides an oxidation catalyst for treating an exhaust gas from a diesel engine, which oxidation catalyst comprises: a first washcoat region for adsorbing NOₓ, wherein the first washcoat region comprises a zeolite catalyst, wherein the zeolite catalyst comprises a noble metal loaded onto or supported on a zeolite by ion-exchange wherein the noble metal comprises palladium (Pd), the zeolite is a small pore zeolite, and wherein the zeolite catalyst does not comprise a base metal selected from the group consisting of iron (Fe), copper (Cu), manganese (Mn), chromium (Cr), cobalt (Co), nickel (Ni), tin (Sn) and mixtures of two or more thereof; a second washcoat region for oxidising nitric oxide (NO), wherein the second washcoat region comprises platinum (Pt) and a support material, wherein the platinum (Pt) is disposed or supported on the support material, and wherein the support material comprises a refractory metal oxide; and a substrate having an inlet end and an outlet end, wherein the first washcoat region and the second washcoat region are disposed or supported on the substrate.

To provide good NOₓ storage activity, the oxidation catalyst of the invention has a first washcoat region, which is formulated to adsorb NOₓ. The first washcoat region has passive NOₓ adsorber (PNA) activity. Passive NOₓ adsorber (PNA) compositions store or adsorb NOₓ at relatively low exhaust gas temperatures, usually by adsorption, and release NOₓ at higher temperatures. The storage mechanism of PNAs is different to lean NOₓ traps (LNTs) [also referred to in the art as NOₓ adsorber catalysts (NACs) or NOₓ storage catalysts (NSCs)], which store NOₓ under "lean" exhaust gas conditions and release NOₓ under "rich" exhaust gas conditions.

The oxidation catalyst of the invention also has a second washcoat region, which is formulated to oxidise nitric oxide (NO) to nitrogen dioxide (NO₂). The second washcoat region contains platinum (Pt) for oxidising NO to NO₂. The platinum can also oxidise carbon monoxide (CO) and hydrocarbons (HCs).

The combination of the first washcoat region and the second washcoat region in the oxidation catalyst of the invention is particularly advantageous for NOₓ storage and release, and oxidation of NO to NO₂. The zeolite catalyst of the first washcoat region has unexpectedly been found to provide excellent NOₓ storage activity and will store NOₓ up to relatively high temperatures. The first washcoat region may release NOₓ when the second washcoat region has reached its effective temperature for oxidising NO to NO₂ or when the temperature is close to the effective temperature. Thus, an improvement in the reduction of NOₓ emissions from a diesel engine can be obtained at both low temperatures (e.g. during the cold start period of the diesel engine) and normal, operating temperatures (e.g. by providing a downstream emissions control device with sufficient NO₂ for optimum performance).

The invention further provides an exhaust system for a diesel engine. The exhaust system comprises an oxidation catalyst of the invention and an emissions control device.

A further aspect of the invention relates to a vehicle or an apparatus (e.g. a stationary or mobile apparatus). The vehicle or apparatus comprises a diesel engine and either the oxidation catalyst or the exhaust system of the invention.

Also described herein are several uses and methods (not according to the invention).

A first method is described that provides a method of treating an exhaust gas from a diesel engine. The method comprises either contacting the exhaust gas with an oxidation catalyst of the invention or passing the exhaust gas through an exhaust system of the invention. The expression "treating an exhaust gas" in this context refers to oxidising carbon monoxide (CO), hydrocarbons (HCs) and/or nitric oxide (NO) in an exhaust gas from a diesel engine.

A second method is described that relates to a method of modulating the content of NOₓ in an exhaust gas from a diesel engine for an emissions control device. The method comprises: (a) controlling the NOₓ content of an exhaust gas by contacting the exhaust gas with an oxidation catalyst of the invention to produce a treated exhaust gas; and (b) passing the treated exhaust gas to an emissions control device.

A first use aspect is described that relates to the use of an oxidation catalyst to treat an exhaust gas from a diesel engine, optionally in combination with an emissions control device. Generally, the oxidation catalyst is used to treat (e.g. oxidise) carbon monoxide (CO) and hydrocarbons (HCs) in an exhaust gas from a diesel engine.

A second use aspect is described that relates to the use of an oxidation catalyst to modulate the content of NOₓ in an exhaust gas from a diesel engine for an emissions control device (e.g. a downstream emissions control device).

A third use aspect described herein relates to the use of an oxidation catalyst in the regeneration of an emissions control device having a filtering substrate (e.g. a downstream emissions control device having a filtering substrate).

A fourth use aspect described herein relates to the use of a zeolite catalyst in an oxidation catalyst for a diesel engine to release stored or adsorbed NOₓ (e.g. from an exhaust gas from a diesel engine) for oxidation of NO to NO₂. The zeolite catalyst comprises a noble metal and a zeolite. The oxidation catalyst comprises: a first washcoat region for adsorbing NOₓ, wherein the first washcoat region comprises the zeolite catalyst; a second washcoat region for oxidation of NO to NO₂, wherein the second washcoat region comprises platinum (Pt) and a support material; and a substrate having an inlet end and an outlet end.

A fifth use aspect described herein relates to the use of an oxidation catalyst as a passive NOₓ absorber (PNA) in an exhaust gas from a diesel engine optionally in combination with an emissions control device.

In the first to fifth use aspects, the oxidation catalyst is an oxidation catalyst in accordance with the invention.

### BRIEF DESCRIPTION OF THE DRAWINGS

Figures 1 to 5 are schematic representations of oxidation catalysts of the invention.
Figure 1 shows an oxidation catalyst comprising a first washcoat region (1) and a second washcoat region/zone (2) disposed on a substrate (3).
Figure 2 shows an oxidation catalyst comprising a first washcoat region (1) and a second washcoat region/zone (2). There is an overlap between the first washcoat region (1) and the second washcoat region/zone (2). A part of the first washcoat region (1) is disposed on the second washcoat region/zone (2). Both the first washcoat region (1) and the second washcoat region/zone (2) are disposed on the substrate (3).
Figure 3 shows an oxidation catalyst comprising a first washcoat region (1) and a second washcoat region/zone (2). There is an overlap between the first washcoat region (1) and the second washcoat region/zone (2). A part of the second washcoat region/zone (2) is disposed on the first washcoat region (1). Both the first washcoat region (1) and the second washcoat region/zone (2) are disposed on the substrate (3).
Figure 4 shows an oxidation catalyst comprising a first washcoat layer (1) disposed on a substrate (3). The second washcoat layer (2) is disposed on the first washcoat layer (1).
Figure 5 shows an oxidation catalyst comprising a second washcoat layer (2) disposed on a substrate (3). The first washcoat layer (1) is disposed on the second washcoat layer (2).
Figure 6 is a graph showing the cumulative NOₓ pollutant emissions for the Examples.

### DETAILED DESCRIPTION OF THE INVENTION

The oxidation catalyst of the invention comprises a first washcoat region and a second washcoat region. The first washcoat region may comprise, or consists essentially of, a zeolite catalyst.

The zeolite catalyst comprises, or may consists essentially of, a noble metal and a zeolite. Zeolite catalysts can be prepared according to the method described in WO 2012/166868.

The noble metal comprises palladium (Pd). It is further preferred that the zeolite catalyst comprises palladium as the only noble metal.

Generally, it is preferred that the noble metal comprises, or consists of, palladium (Pd) and optionally a second metal selected from the group consisting of platinum (Pt), rhodium (Rh), gold (Au), silver (Ag), iridium (Ir) and ruthenium (Ru). Preferably, the noble metal comprises, or consists of, palladium (Pd) and optionally a second metal consisting of platinum (Pt) and rhodium (Rh). Even more preferably, the noble metal comprises, or consists of, palladium (Pd) and optionally platinum (Pt). When the noble metal comprises, or consists of, palladium (Pd) and a second metal, then the ratio by mass of palladium (Pd) to the second metal is > 1:1. More preferably, the ratio by mass of palladium (Pd) to the second metal is > 1:1 and the molar ratio of palladium (Pd) to the second metal is > 1:1.

The zeolite catalyst does not comprise a base metal.

It may be preferable that the zeolite catalyst is substantially free of barium (Ba), more preferably the zeolite catalyst is substantially free of an alkaline earth metal. Thus, the zeolite catalyst may not comprise barium, preferably the zeolite catalyst does not comprise an alkaline earth metal.

The zeolite is typically selected from an aluminosilicate zeolite, an aluminophosphate zeolite and a silico-aluminophosphate zeolite. For example, the zeolite is typically selected from an aluminosilicate zeolite and an aluminophosphate zeolite. It is preferred that the zeolite is selected from an aluminosilicate zeolite and a silico-aluminophosphate zeolite. More preferably, the zeolite is an aluminosilicate zeolite.

The noble metal is loaded onto or supported on the zeolite by ion-exchange. Thus, the zeolite catalyst comprises, or may consist essentially of, a noble metal and a zeolite, wherein the noble metal is loaded onto or supported on the zeolite by ion exchange.

In general, the zeolite may be a metal-substituted zeolite (e.g. metal-substituted aluminosilicate zeolite or metal-substituted aluminophosphate zeolite). The metal of the metal-substituted zeolite may be the noble metal (e.g. the zeolite is a noble metal substituted zeolite). For the avoidance of doubt, the term "metal-substituted" is synonymous with "ion-exchanged".

The zeolite catalyst generally has at least 1 % by weight (i.e. of the amount of noble metal of the zeolite catalyst) of the noble metal located inside pores of the zeolite, preferably at least 5 % by weight, more preferably at least 10 % by weight, such as at least 25 % by weight, even more preferably at least 50 % by weight.

The zeolite is a small pore zeolite (i.e. a zeolite having a maximum ring size of eight tetrahedral atoms).

Typically, the zeolite is composed of aluminium, silicon, and/or phosphorus. The zeolite generally has a three-dimensional arrangement of SiO₄, AlO₄, and/or PO₄ that are joined by the sharing of oxygen atoms. The zeolite may have an anionic framework. The charge of the anionic framework may be counterbalanced by cations, such as by cations of alkali and/or alkaline earth elements (e.g., Na, K, Mg, Ca, Sr, and Ba), ammonium cations and/or protons.

The small pore zeolite preferably has a Framework Type selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON, as well as a mixture or intergrowth of any two or more thereof. The intergrowth is preferably selected from KFI-SIV, ITE-RTH, AEW-UEI, AEI-CHA, and AEI-SAV. More preferably, the small pore zeolite has a Framework Type that is AEI, CHA or an AEI-CHA intergrowth. Even more preferably, the small pore zeolite has a Framework Type that is AEI or CHA, particularly AEI.

Preferably, the small pore zeolite is an aluminosilicate zeolite or a silico-aluminophosphate zeolite. More preferably, the small pore zeolite is an aluminosilicate zeolite, especially when the small pore zeolite has a Framework Type that is AEI, CHA or an AEI-CHA intergrowth, particularly AEI or CHA.

In a second zeolite catalyst embodiment, the zeolite has a Framework Type selected from the group consisting of AEI, ERI, CHA, and LEV, as well as mixtures of any two or more thereof.

Each of the aforementioned three-letter codes represents a framework type in accordance with the "IUPAC Commission on Zeolite Nomenclature" and/or the "Structure Commission of the International Zeolite Association".

The zeolite typically has a silica to alumina molar ratio (SAR) of 10 to 200 (e.g. 10 to 40), such as 10 to 100, more preferably 15 to 80 (e.g. 15 to 30). The SAR generally relates to an aluminosilicate zeolite or a silico-aluminophosphate zeolite.

The zeolite catalyst of the first catalyst embodiment (and also for some of the Framework Types of the second zeolite catalyst embodiment) may have an infrared spectrum having a characteristic absorption peak in a range of from 750 cm⁻¹ to 1050 cm⁻¹ (in addition to the absorption peaks for the zeolite itself). Preferably, the characteristic absorption peak is in the range of from 800 cm⁻¹ to 1000 cm⁻¹, more preferably in the range of from 850 cm⁻¹ to 975 cm⁻¹.

It has surprisingly been found that a washcoat region comprising the zeolite catalyst of the first zeolite catalyst embodiment has passive NOₓ adsorber (PNA) activity. A washcoat region with PNA activity can be used to store NOₓ when exhaust gas temperatures are relatively cool, such as shortly after start-up of a diesel engine. NOₓ storage by the zeolite catalyst occurs at temperatures (e.g. less than 200 °C) that are lower than the temperature at which the platinum component of the second washcoat region can perform significant oxidation of nitric oxide (NO) to nitrogen dioxide (NO₂).

As the diesel engine warms up, the exhaust gas temperature increases and the temperature of the zeolite catalyst (and the washcoat region having PNA activity) will also increase. The zeolite catalyst will release adsorbed NOₓ at these higher temperatures (e.g. 200 °C or above). The zeolite catalyst can release adsorbed NOₓ when the platinum component of the second washcoat region has reached its effective temperature for oxidising NO or the zeolite catalyst can release adsorbed NOₓ at just below this effective temperature. The zeolite catalyst has unexpectedly been found to have a high release temperature for adsorbed NOₓ.

It has also been unexpectedly found that a washcoat region comprising the zeolite catalyst of the second zeolite catalyst embodiment has cold start catalyst (CSC™) activity. Such activity can reduce emissions during the cold start period by adsorbing NOₓ and hydrocarbons (HCs) at relatively low exhaust gas temperatures (e.g. less than 200 °C). Adsorbed NOₓ and/or HCs can be released by the washcoat region when the temperature of the zeolite catalyst is close to or above the effective temperature of the other catalyst components for oxidising NO and/or HCs.

Generally, the first washcoat region typically comprises a total loading of noble metal (i.e. of the zeolite catalyst in the first washcoat region) of ≥ 0.035 gL⁻¹ (≥ 1 g ft⁻³), preferably > 0.035 gL⁻¹ (> 1 g ft⁻³), and more preferably > 0.071 gL⁻¹ (> 2 g ft⁻³).

The first washcoat region typically comprises a total loading of noble metal (i.e. of the zeolite catalyst in the first washcoat region) of 0.035 to 8.83 gL⁻¹ (1 to 250 g ft⁻³), preferably 0.18 to 5.30 gL⁻¹ (5 to 150 g ft⁻³), more preferably 0.35 to 3.53 gL⁻¹ (10 to 100 g ft⁻³). The amount of noble metal in the zeolite catalyst can affect its NOₓ storage activity.

The first washcoat region may comprise a binder and/or an oxygen storage component. The oxygen storage component may comprise, or consist essentially of, ceria.

The binder may be refractory metal oxide. The refractory metal oxide may be a refractory metal oxide as described below in relation to a support material in the second washcoat region, such as alumina.

When the first washcoat region comprises a binder, then it is preferred that the binder does not comprise a noble metal (e.g. a noble metal is not supported on the refractory metal oxide of the binder).

It may be preferable that the first washcoat region is substantially free of ceria, preferably an oxygen storage component. Thus, the first washcoat region may not comprise ceria, preferably the first washcoat region does not comprise an oxygen storage component.

The oxidation catalyst of the invention comprises a second washcoat region for oxidising nitric oxide (NO) (i.e. to nitrogen dioxide (NO₂)). The second washcoat region may also oxidise some carbon monoxide (CO) and/or some hydrocarbons (HCs) during use.

For the avoidance of doubt, the first washcoat region is different (i.e. different composition) to the second washcoat region.

The second washcoat region comprises, or may consist essentially of, platinum and a support material.

The second washcoat region may further comprise palladium. Thus, the second washcoat region may comprise, or consist essentially of, platinum, palladium and a support material.

When the second washcoat region comprises platinum and palladium, then the platinum and palladium may be a platinum-palladium alloy, preferably a platinum-palladium bimetallic alloy.

In general, it is preferred that the second washcoat region comprises a platinum group metal (PGM) selected from the group consisting of platinum and the combination of platinum and palladium (i.e. the second washcoat region comprises platinum or platinum and palladium as the only platinum group metal(s)). Thus, the second washcoat region preferably does not comprise one or more other platinum group metals, such as ruthenium (Ru), rhodium (Rh), osmium (Os) and/or iridium (Ir).

The second washcoat region typically has a total loading of PGM of 0.18 to 10.59 gL⁻¹ (5 to 300 g ft⁻³). It is preferred that the second washcoat region has a total loading of the PGM of 0.35 to 8.83 gL⁻¹ (10 to 250 g ft⁻³) (e.g. 2.65 to 6.18 gL⁻¹ (75 to 175 g ft⁻³)), more preferably 0.53 to 7.06 gL⁻¹ (15 to 200 g ft⁻³) (e.g. 1.77 to 5.30 gL⁻¹ (50 to 150 g ft⁻³)), still more preferably 0.17 to 5.30 gL⁻¹ (20 to 150 g ft⁻³). When platinum is the only PGM present in the second washcoat region, then the total loading refers to the loading of platinum.

When the second washcoat region comprises platinum and palladium, then typically the second washcoat region may comprise a ratio by weight of platinum to palladium of 20:1 to 1:20 (e.g. 15:1 to 1:15), preferably 10:1 to 1:10 (e.g. 7.5:1 to 1:7.5), more preferably 6:1 to 1:6 (e.g. 3:1 to 1:3), and even more preferably 2.5:1 to 1:1.

When the second washcoat region comprises platinum and palladium, it is preferred that the second washcoat region comprises a total weight of platinum that is greater than or equal to the total weight of palladium (e.g. the ratio of Pt:Pd by weight is ≥ 1:1).

Thus, the second washcoat region may comprise a ratio by weight of platinum to palladium of 20:1 to 1:1 (e.g. 15.1:1 to 1.1:1), more preferably 10:1 to 1.25:1 (e.g. 8:1 to 1.5:1), and still more preferably 6:1 to 2:1.

It is preferred that the second washcoat region comprises a total weight of platinum that is greater than the total weight of palladium (e.g. the ratio of Pt:Pd by weight is > 1:1). The ratio of platinum to palladium by total weight is generally ≥ 2:1 (e.g. Pt:Pd 1:0 to 2:1), more preferably ≥ 4:1 (e.g. Pt:Pd 1:0 to 4:1). Advantageous NO oxidation activity can be obtained when the total weight of platinum is greater than or equal to the total weight of palladium in the first washcoat region.

It is generally preferred that the second washcoat region is substantially free of palladium, particularly substantially free of palladium (Pd) disposed or supported on the support material. More preferably, the second washcoat region does not comprise palladium, particularly palladium disposed or supported on the support material.

The presence of palladium, particularly in a large amount, in the second washcoat region can be detrimental to NO oxidation activity. The NO oxidising activity of palladium is generally poor under the typical usage conditions for a diesel oxidation catalyst. Also, any palladium that is present may react with some of the platinum that is present to form an alloy. This can also be detrimental to the NO oxidation activity of the second washcoat region because platinum-palladium alloys are not as active toward NO oxidation as platinum is by itself.

The platinum is disposed or supported on the support material. The Pt may be disposed directly onto or is directly supported by the support material (e.g. there is no intervening support material between the Pt and the support material). For example, platinum can be dispersed on the support material.

When the second washcoat region comprises platinum and palladium, then the palladium may be disposed or supported on the support material. It is preferred that both the platinum and the palladium are disposed or supported on the support material (i.e. the same support material is used for both platinum and palladium).

When the second washcoat region comprises platinum and palladium, then the second washcoat region may comprise a platinum support material (e.g. a support material for supporting platinum) and a palladium support material (e.g. a support material for supporting palladium). The second washcoat region may therefore comprise, or consist essentially of, platinum, palladium, a platinum support material and a palladium support material. The platinum may be disposed or supported on the platinum support material and the palladium may be disposed or supported on the palladium support material. The platinum support material and the palladium support material are preferably different (e.g. different composition).

The support material comprises, or may consist essentially of, a refractory metal oxide. Refractory metal oxides suitable for use as a catalytic component of an oxidation catalyst for a diesel engine are well known in the art.

The refractory metal oxide is typically selected from the group consisting of alumina, silica, titania, zirconia, ceria and a mixed or composite oxide thereof, such as a mixed or composite oxide of two or more thereof. For example, the refractory metal oxide may be selected from the group consisting of alumina, silica, titania, zirconia, ceria, silica-alumina, titania-alumina, zirconia-alumina, ceria-alumina, titania-silica, zirconia-silica, zirconia-titania, ceria-zirconia and alumina-magnesium oxide.

The support material, or the refractory metal oxide thereof, may optionally be doped (e.g. with a dopant). The dopant may be selected from the group consisting of zirconium (Zr), titanium (Ti), silicon (Si), yttrium (Y), lanthanum (La), praseodymium (Pr), samarium (Sm), neodymium (Nd) and an oxide thereof.

The inclusion of a dopant can thermally stabilise the refractory metal oxide or support material. It is to be understood that any reference to "doped" in this context refers to a material where the bulk or host lattice of the refractory metal oxide is substitution doped or interstitially doped with a dopant. In some instances, small amounts of the dopant may be present at a surface of the refractory metal oxide. However, most of the dopant will generally be present in the body of the refractory metal oxide. The chemical and/or physical properties of a refractory metal oxide are often affected by the presence of a dopant.

When the support material, or the refractory metal oxide thereof, is doped, the total amount of dopant is 0.25 to 5 % by weight, preferably 0.5 to 3 % by weight (e.g. about 1 % by weight).

The support material, or the refractory metal oxide thereof, may comprise, or consist essentially of, alumina doped with a dopant. It is particularly preferred that the support material or the refractory metal oxide thereof comprises, or consists essentially of, alumina doped with a dopant when the first washcoat region comprises an alkaline earth metal.

The alumina may be doped with a dopant comprising silicon (Si), magnesium (Mg), barium (Ba), lanthanum (La), cerium (Ce), titanium (Ti), or zirconium (Zr) or a combination of two or more thereof. The dopant may comprise, or consist essentially of, an oxide of silicon, an oxide of magnesium, an oxide of barium, an oxide of lanthanum, an oxide of cerium, an oxide of titanium or an oxide of zirconium. Preferably, the dopant comprises, or consists essentially of, silicon, magnesium, barium, cerium, or an oxide thereof, particularly silicon, or cerium, or an oxide thereof. More preferably, the dopant comprises, or consists essentially of, silicon, magnesium, barium, or an oxide thereof; particularly silicon, magnesium, or an oxide thereof; especially silicon or an oxide thereof.

Examples of alumina doped with a dopant include alumina doped with silica, alumina doped with magnesium oxide, alumina doped with barium or barium oxide, alumina doped with lanthanum oxide, or alumina doped with ceria, particularly alumina doped with silica, alumina doped with lanthanum oxide, or alumina doped with ceria. It is preferred that the alumina doped with a dopant is alumina doped with silica, alumina doped with barium or barium oxide, or alumina doped with magnesium oxide. More preferably, the alumina doped with a dopant is alumina doped with silica or alumina doped with magnesium oxide. Even more preferably, the alumina doped with a dopant is alumina doped with silica. Alumina doped with a dopant can be prepared using methods known in the art or, for example, by a method described in US 5,045,519.

When the alumina is alumina doped with silica, then the alumina is doped with silica in a total amount of 0.5 to 45 % by weight (i.e. % by weight of the alumina), preferably 1 to 40 % by weight, more preferably 1.5 to 30 % by weight (e.g. 1.5 to 10 % by weight), particularly 2.5 to 25 % by weight, more particularly 3.5 to 20 % by weight (e.g. 5 to 20 % by weight), even more preferably 4.5 to 15 % by weight.

When the alumina is alumina doped with magnesium oxide, then the alumina is doped with magnesium in an amount as defined above or an amount of 1 to 30 % by weight (i.e. % by weight of the alumina), preferably 5 to 25 % by weight.

It is preferred that the support material, or the refractory metal oxide thereof, is not doped with a dopant comprising, or consisting essentially of manganese. Thus, the support material, or the refractory metal oxide thereof, is not promoted with a promoter, such as a promoter selected from the group consisting of tin, manganese, indium, group VIII metal (e.g. Fe, Co, Ni, Ru, Rh, Pd, Os, Ir and Pt, particularly Ir) and combinations thereof.

Alternatively or additionally, the support material, or refractory metal oxide thereof, may comprise, or consist essentially of, an alkaline earth metal aluminate. The term "alkaline earth metal aluminate" generally refers to a compound of the formula MAl₂O₄ where "M" represents the alkaline earth metal, such as Mg, Ca, Sr or Ba. Such compounds generally comprise a spinel structure. These compounds can be prepared using conventional methods known in the art or by using a method described in EP 0945165, US 6,217,837 or US 6,517,795.

Typically, the alkaline earth metal aluminate is magnesium aluminate (MgAl₂O₄), calcium aluminate (CaAl₂O₄), strontium aluminate (SrAl₂O₄), barium aluminate (BaAl₂O₄), or a mixture of two or more thereof. Preferably, the alkaline earth metal aluminate is magnesium aluminate (MgAl₂O₄).

In general, when the support material, or the refractory metal oxide thereof, comprises or consists essentially of a mixed or composite oxide of alumina (e.g. silica-alumina, alumina-magnesium oxide or a mixture of alumina and ceria), then preferably the mixed or composite oxide of alumina comprises at least 50 to 99 % by weight of alumina, more preferably 70 to 95 % by weight of alumina, even more preferably 75 to 90 % by weight of alumina.

When the support material, or refractory metal oxide thereof, comprises or consists essentially of ceria-zirconia, then the ceria-zirconia may consist essentially of 20 to 95 % by weight of ceria and 5 to 80 % by weight of zirconia (e.g. 50 to 95 % by weight ceria and 5 to 50 % by weight zirconia), preferably 35 to 80 % by weight of ceria and 20 to 65 % by weight zirconia (e.g. 55 to 80 % by weight ceria and 20 to 45 % by weight zirconia), even more preferably 45 to 75 % by weight of ceria and 25 to 55 % by weight zirconia.

In general, the palladium support material comprises, or consists essentially of, a refractory metal oxide. The palladium support material, or the refractory metal oxide thereof, may be a support material or a refractory metal oxide as herein defined above. When the second washcoat region comprises a palladium support material, it is preferred that the palladium support material, or the refractory metal oxide thereof, comprises, or consists essentially of, ceria and/or ceria-zirconia.

The platinum support material comprises, or may consist essentially of, a refractory metal oxide. The platinum support material, or the refractory metal oxide thereof, may be a support material or refractory metal oxide as herein defined above. When the second washcoat region comprises a platinum support material, it is preferred that the platinum support material or the refractory metal oxide thereof comprises, or consists essentially of, alumina, wherein the alumina is optionally doped with a dopant, such as described above. When the platinum support material comprises alumina doped with a dopant, it is preferred that the dopant comprises, or consists essentially of, silicon, magnesium, cerium, lanthanum or an oxide thereof, more preferably silicon or an oxide thereof.

The platinum support material (or the refractory metal oxide thereof) and/or the palladium support material (or the refractory metal oxide thereof) is not doped with a dopant comprising, or consisting essentially of manganese. Thus, the platinum support material (or the refractory metal oxide thereof) and/or the palladium support material (or the refractory metal oxide thereof) is not promoted with a promoter, such as a promoter selected from the group consisting of tin, manganese, indium, group VIII metal (e.g. Fe, Co, Ni, Ru, Rh, Pd, Os, Ir and Pt, particularly Ir) and combinations thereof.

The second washcoat region may comprise an amount of support material (e.g. the total amount of the support material and, when present, platinum support material and palladium support material) of 6.10 to 274.61 gL⁻¹ (0.1 to 4.5 g in⁻³) (e.g. 15.26 to 256.30 gL⁻¹ (0.25 to 4.2 g in⁻³)), preferably 18.31 to 231.89 gL⁻¹ (0.3 to 3.8 g in⁻³), still more preferably 30.51 to 183.07 gL⁻¹ (0.5 to 3.0 g in⁻³) (61.02 to 167.82 gL⁻¹ (1 to 2.75 g in⁻³) or 45.77 to 91.54 gL⁻¹ (0.75 to 1.5 g in⁻³)), and even more preferably 36.61 to 152.56 gL⁻¹ (0.6 to 2.5 g in⁻³) (e.g. 45.77 to 140.36 gL⁻¹ (0.75 to 2.3 g in⁻³)).

The second washcoat region may further comprise a hydrocarbon adsorbent material.

In general, the hydrocarbon adsorbent material may be a zeolite. It is preferred that the zeolite is a medium pore zeolite (e.g. a zeolite having a maximum ring size of ten tetrahedral atoms) or a large pore zeolite (e.g. a zeolite having a maximum ring size of twelve tetrahedral atoms). It may be preferable that the zeolite is not a small pore zeolite (e.g. a zeolite having a maximum ring size of eight tetrahedral atoms).

Examples of suitable zeolites or types of zeolite include faujasite, clinoptilolite, mordenite, silicalite, ferrierite, zeolite X, zeolite Y, ultrastable zeolite Y, AEI zeolite, ZSM-5 zeolite, ZSM-12 zeolite, ZSM-20 zeolite, ZSM-34 zeolite, CHA zeolite, SSZ-3 zeolite, SAPO-5 zeolite, offretite, a beta zeolite or a copper CHA zeolite. The zeolite is preferably ZSM-5, a beta zeolite or a Y zeolite.

When the second washcoat region comprises a hydrocarbon adsorbent, the total amount of hydrocarbon adsorbent is 3.05 to 183.07 gL⁻¹ (0.05 to 3.00 g in⁻³), particularly 6.10 to 122.05 gL⁻¹ (0.10 to 2.00 g in⁻³), more particularly 12.20 to 61.02 gL⁻¹ (0.2 to 1.0 g in⁻³). For example, the total amount of hydrocarbon adsorbent may be 48.82 to 106.79 gL⁻¹ (0.8 to 1.75 g in⁻³), such as 61.02 to 91.54 gL⁻¹ (1.0 to 1.5 g in⁻³).

In some applications, it may generally be preferable that the second washcoat region is substantially free of a hydrocarbon adsorbent material, particularly a zeolite. Thus, the second washcoat region may not comprise a hydrocarbon adsorbent material.

The second washcoat region may further comprise an alkaline earth metal. The second washcoat region typically comprises an effective amount of an alkaline earth metal for promoting oxidation of carbon monoxide (CO) and/or hydrocarbons (HCs).

The alkaline earth metal may promote the oxidation of CO and/or HCs (e.g. low temperature oxidation activity of CO and/or HCs may be improved), particularly when (i) the alkaline earth metal is combined with certain support materials, such as alumina doped with dopant, especially alumina doped with silica, and/or (ii) the washcoat region comprises a total weight of platinum that is greater than or equal to the total weight of palladium (e.g. the ratio of Pt:Pd by weight is ≥ 1:1).

The alkaline earth metal may be selected from magnesium (Mg), calcium (Ca), strontium (Sr), barium (Ba) and a combination of two or more thereof. The alkaline earth metal is preferably calcium (Ca), strontium (Sr), or barium (Ba), more preferably strontium (Sr) or barium (Ba), and most preferably the alkaline earth metal is barium (Ba).

It is generally preferred that the alkaline earth metal is disposed or supported on the support material. When the second washcoat region comprises a platinum support material, the alkaline earth metal may be disposed or supported on the platinum support material. When the second washcoat region comprises a palladium support material, the alkaline earth metal may be disposed or supported on the palladium support material.

Typically, the oxidation catalyst or the second washcoat region comprises a total amount of the alkaline earth metal of 0.002 to 0.132 mol L⁻¹ (0.07 to 3.75 mol ft⁻³), particularly 0.004 to 0.106 mol L⁻¹ (0.1 to 3.0 mol ft⁻³) , more particularly 0.007 to 0.088 mol L⁻¹ (0.2 to 2.5 mol ft⁻³) (e.g. 0.009 to 0.035 mol L⁻¹ (0.25 to 1.0 mol ft⁻³)), such as 0.011 to 0.079 mol L⁻¹ (0.3 to 2.25 mol ft⁻³), especially 0.012 to 0.065 mol L⁻¹ (0.35 to 1.85 mol ft⁻³), preferably 0.014 to 0.053 mol L⁻¹ (0.4 to 1.5 mol ft⁻³), even more preferably 0.018 to 0.044 mol L⁻¹ (0.5 to 1.25 mol ft⁻³).

In general, the oxidation catalyst or the second washcoat region comprises a total amount of the alkaline earth metal of 0.35 to 17.66 gL⁻¹ (10 to 500 g ft⁻³) (e.g. 2.12 to 14.13 gL⁻¹ (60 to 400 g ft⁻³) or 0.35 to 15.89 gL⁻¹ (10 to 450 g ft⁻³)), particularly 0.71 to 14.13 gL⁻¹ (20 to 400 g ft⁻³), more particularly 1.24 to 12.36 gL⁻¹ (35 to 350 g ft⁻³), such as 1.77 to 10.59 gL⁻¹ (50 to 300 g ft⁻³), especially 2.65 to 8.83 gL⁻¹ (75 to 250 g ft⁻³).

The oxidation catalyst generally comprises an amount of the alkaline earth metal of 0.1 to 20 % by weight, preferably 0.5 to 17.5 % by weight, more preferably 1 to 15 % by weight, and even more preferably 1.5 to 12.5 % by weight. The amount of the alkaline earth metal may be from 1.0 to 8.0 % by weight, such as 1.5 to 7.5 % by weight, particularly 2.0 to 7.0 % by weight (e.g. 2.5 to 6.5 % by weight or 2.0 to 5.0 % by weight). The amount of the alkaline earth metal may be from 5.0 to 17.5 % by weight, such as 7.5 to 15 % by weight, particularly 8.0 to 14 % by weight (e.g. 8.5 to 12.5 % by weight or 9.0 to 13.5 % by weight).

Typically, the second washcoat region comprises a ratio by weight of the alkaline earth metal to platinum group metal (PGM) of 0.25:1 to 20:1 (e.g. 0.3:1 to 20:1). It is preferred that the ratio of the total mass of the alkaline earth metal to the total mass of the platinum group metal (PGM) is 0.5:1 to 17:1, more preferably 1:1 to 15:1, particularly 1.5:1 to 10:1, still more preferably 2:1 to 7.5:1, and even more preferably 2.5:1 to 5:1.

When the second washcoat region comprises platinum (Pt) as the only platinum group metal (PGM), then preferably the second washcoat region comprises a total weight of the alkaline earth metal that is greater than the total weight of platinum (Pt).

The second washcoat region may further comprise manganese (Mn). The manganese may be present in an elemental form or as an oxide. The second washcoat region typically comprises manganese or an oxide thereof.

Excellent activity toward the oxidation of nitric oxide (NO) in an exhaust gas from a diesel engine can be obtained when manganese (Mn) is combined with platinum (Pt) in the second washcoat region of the oxidation catalyst. Platinum is expensive and is often included in oxidation catalysts in relatively large amounts for its oxidative activity. The inclusion of manganese (Mn) in combination with platinum (Pt) may result in an improvement in NO oxidation activity or allow the use of a reduced amount of Pt to achieve a given level of NO oxidation.

The manganese (Mn) is typically disposed or supported on the support material. The manganese (Mn) may be disposed directly onto or is directly supported by the support material (e.g. there is no intervening support material between the Mn and the support material). When the second washcoat region comprises a platinum support material and a palladium support material, then the manganese may be disposed or supported on the platinum support material and/or the palladium support material.

The second washcoat region typically has a total loading of manganese (Mn) of 0.18 to 17.66 gL⁻¹ (5 to 500 g ft⁻³). It is preferred that the second washcoat region has a total loading of manganese (Mn) of 0.35 to 8.83 gL⁻¹ (10 to 250 g ft⁻³) (e.g. 75 to 175 g ft⁻³)), more preferably 0.53 to 7.06 gL⁻¹ (15 to 200 g ft⁻³) (e.g. 1.77 to 5.30 gL⁻¹ (50 to 150 g ft⁻³)), still more preferably 0.71 to 5.30 gL⁻¹ (20 to 150 g ft⁻³).

Typically, the second washcoat region comprises a ratio of Mn:Pt by weight of ≤ 5:1, more preferably < 5:1.

In general, the second washcoat region comprises a ratio of Mn:Pt by weight of ≥ 0.2:1 (e.g. ≥ 0.5:1), more preferably > 0.2:1 (e.g. > 0.5:1).

The second washcoat region may comprise a ratio by total weight of manganese (Mn) to platinum of 5:1 to 0.2:1 (e.g. 5:1 to 1:2), preferably 4.5:1 to 1:1 (e.g. 4:1 to 1.1:1), more preferably 4:1 to 1.5:1.

When the second washcoat region comprises manganese, then preferably the support material, or the refractory metal oxide thereof, may comprise, or consist essentially of, alumina optionally doped with a dopant (e.g. alumina doped with silica). When the second washcoat region comprises a platinum support material and a palladium support material, then the platinum support material and/or the palladium support material may comprise, or consist essentially of, alumina optionally doped with a dopant (e.g. alumina doped with silica). It has been found that the combination of manganese (Mn), platinum (Pt) and a doped alumina support material, particularly an alumina support material doped with silica, provides excellent NO oxidation activity and can stabilise NO oxidation activity of the oxidation catalyst over its lifetime.

A problem with using an oxidation catalyst to "boost" the NO₂ content of an exhaust gas is that the NO oxidation activity of the oxidation catalyst usually varies over its lifetime. Generally, as the catalyst "ages" (i.e. the catalyst has been used over a prolonged period), the NO oxidation activity of the catalyst decreases. Whilst the amount of NO₂ in the exhaust gas that exits an "aged" oxidation catalyst may be sufficient for optimal performance of a downstream emissions control device (e.g. an SCR catalyst), this variation in the amount of NO₂ that is generated is problematic for calibrating the dosing of the nitrogenous reductant for performing active SCR. When the second washcoat region comprises manganese and platinum, the oxidation catalyst of the invention can show relatively stable NO oxidation activity over its lifetime. Thus, the difference in NO oxidation activity of the oxidation catalyst in a fresh state (i.e. when it is "new" and has not been subjected to repeated, prolonged use) and an aged state is typically small.

It is generally preferred that the second washcoat region does not comprise both an alkaline earth metal and manganese. Thus, when the second washcoat region comprises manganese, it is preferred that the second washcoat region does not comprise an alkaline earth metal. When the second washcoat region comprises an alkaline earth metal, it is preferred that the second washcoat region does not comprise manganese.

It may be further preferable that the second washcoat region is substantially free of a zeolite catalyst, such as the zeolite catalyst described herein above. Thus, the second washcoat region may not comprise the zeolite catalyst.

When the second washcoat region comprises manganese, then the second washcoat region typically does not comprise indium and/or iridium, preferably the second washcoat region does not comprise indium, iridium and/or magnesium.

Additionally or alternatively, the second washcoat region may be substantially free of rhodium and/or an alkali metal and/or an alkaline earth metal, particularly an alkali metal and/or an alkaline earth metal disposed or supported on the support material. Thus, the second washcoat may not comprise rhodium and/or an alkali metal and/or an alkaline earth metal, particularly an alkali metal and/or an alkaline earth metal disposed or supported on the support material.

The first washcoat region and the second washcoat region are disposed or supported on the substrate.

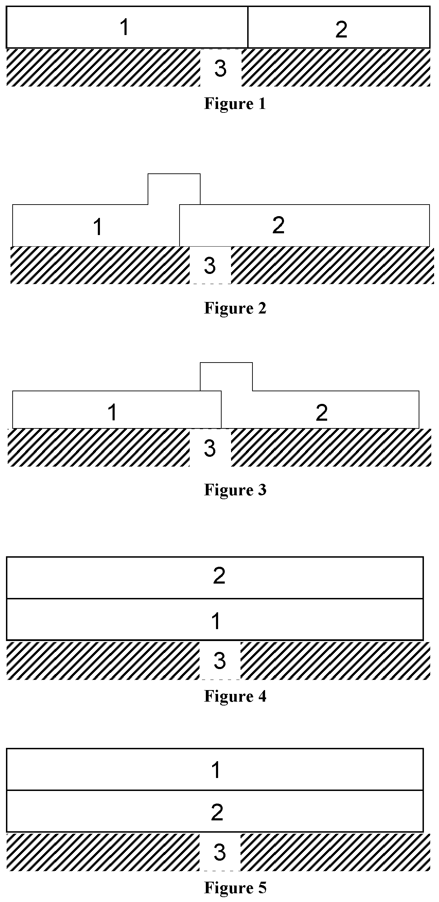

The first washcoat region may be disposed directly on to the substrate (i.e. the first washcoat region is in contact with a surface of the substrate; see Figures 1 to 4). The second washcoat region may be:
(a) disposed or supported on the first washcoat region (e.g. see Figures 2 to 4); and/or
(b) disposed directly on to the substrate [i.e. the second washcoat region is in contact with a surface of the substrate] (e.g. see Figures 1 to 3); and/or
(c) in contact with the first washcoat region [i.e. the second washcoat region is adjacent to, or abuts, the first washcoat region].

When the second washcoat region is disposed directly on to the substrate, then a part or portion of the second washcoat region may be in contact with the first washcoat region or the first washcoat region and the second washcoat region may be separated (e.g. by a gap).

When the second washcoat region is disposed or supported on the first washcoat region, all or part of the second washcoat region is preferably disposed directly on to the first washcoat region (i.e. the second washcoat region is in contact with a surface of the first washcoat region). The second washcoat region may be a second washcoat layer and the first washcoat region may be a first washcoat layer.

It may be preferable that only a portion or part of the second washcoat region is disposed or supported on the first washcoat region. Thus, the second washcoat region does not completely overlap or cover the first washcoat region.

In addition or as an alternative, the second washcoat region may be disposed directly on to the substrate (i.e. the second washcoat region is in contact with a surface of the substrate; see Figures 1 to 3 and 5). The first washcoat region may be:
(i) disposed or supported on the second washcoat region (e.g. see Figures 2, 3 and 5); and/or
(ii) disposed directly on to the substrate [i.e. the first washcoat region is in contact with a surface of the substrate] (e.g. see Figures 1 to 3); and/or
(iii) in contact with the second washcoat region [i.e. the first washcoat region is adjacent to, or abuts, the second washcoat region].

When the first washcoat region is disposed directly on to the substrate, then a part or portion of the first washcoat region may be in contact with the second washcoat region or the first washcoat region and the second washcoat region may be separated (e.g. by a gap).

When the first washcoat region is disposed or supported on the second washcoat region, all or part of the first washcoat region is preferably disposed directly on to the second washcoat region (i.e. the first washcoat region is in contact with a surface of the second washcoat region). The first washcoat region may be a first washcoat layer and the second washcoat region may be a second washcoat layer.

In general, the first washcoat region may be a first washcoat layer or a first washcoat zone. When the first washcoat region is a first washcoat layer, then it is preferred that the first washcoat layer extends for an entire length (i.e. substantially an entire length) of the substrate, particularly the entire length of the channels of a substrate monolith. When the first washcoat region is a first washcoat zone, then typically the first washcoat zone has a length of 10 to 90 % of the length of the substrate (e.g. 10 to 45 %), preferably 15 to 75 % of the length of the substrate (e.g. 15 to 40 %), more preferably 20 to 70 % (e.g. 30 to 65 %, such as 25 to 45 %) of the length of the substrate, still more preferably 25 to 65 % (e.g. 35 to 50 %).

The second washcoat region may generally be a second washcoat layer or a second washcoat zone. When the second washcoat region is a second washcoat layer, then it is preferred that the second washcoat layer extends for an entire length (i.e. substantially an entire length) of the substrate, particularly the entire length of the channels of a substrate monolith. When the second washcoat region is a second washcoat zone, then typically the second washcoat zone has a length of 10 to 90 % of the length of the substrate (e.g. 10 to 45 %), preferably 15 to 75 % of the length of the substrate (e.g. 15 to 40 %), more preferably 20 to 70 % (e.g. 30 to 65 %, such as 25 to 45 %) of the length of the substrate, still more preferably 25 to 65 % (e.g. 35 to 50 %).

In a first oxidation catalyst embodiment, the first washcoat region is arranged to contact the exhaust gas at or near the outlet end of the substrate and after contact of the exhaust gas with the second washcoat region. Such an arrangement may be advantageous when the first washcoat region has a low light off temperature for CO and/or HCs, and can be used to generate an exotherm.

There are several oxidation catalyst arrangements that facilitate the contact of the exhaust gas with the first washcoat region at an outlet end of the substrate and after the exhaust gas has been in contact with the second washcoat region. The first washcoat region is arranged or oriented to contact exhaust after it has contacted the second washcoat region when it has any one of the first to third oxidation catalyst arrangements.

Typically, the second washcoat region is arranged or oriented to contact exhaust gas before the first washcoat region. Thus, the second washcoat region may be arranged to contact exhaust gas as it enters the oxidation catalyst and the first washcoat region may be arranged to contact the exhaust gas as it leaves the oxidation catalyst. The zoned arrangement of the first oxidation catalyst arrangement is particularly advantageous in this respect.

In a first oxidation catalyst arrangement, the second washcoat region is disposed or supported upstream of the first washcoat zone. Preferably, the first washcoat region is a first washcoat zone disposed at or near an outlet end of the substrate and the second washcoat region is a second washcoat zone disposed at or near an inlet end of the substrate.

In a second oxidation catalyst arrangement, the second washcoat region is a second washcoat layer and the first washcoat region is a first washcoat zone. The first washcoat zone is disposed on the second washcoat layer at or near an outlet end of the substrate.

In a third oxidation catalyst arrangement, the second washcoat region is a second washcoat layer and the first washcoat region is a first washcoat layer. The second washcoat layer is disposed on the first washcoat layer.

In a second oxidation catalyst embodiment, the second washcoat region is arranged to contact the exhaust gas at or near the outlet end of the substrate and after contact of the exhaust gas with the first washcoat region.

The oxidation catalyst of the second oxidation catalyst embodiment may show advantageous oxidative activity, particularly toward NO, when it has an arrangement that facilitates the contact of the exhaust gas with the washcoat region containing platinum (Pt) shortly before the exhaust gas exits the catalyst and after it has been in contact with the washcoat region containing the zeolite catalyst. In such arrangements of the oxidation catalyst, as the exhaust gas enters the catalyst it first comes into contact with the first washcoat region for adsorbing NOₓ. This is particularly advantageous at relatively low exhaust gas temperatures, such as during the cold start period. After the exhaust gas has passed through or over the first washcoat region, it comes into contact with the second washcoat region for oxidising NO before it finally passes through the outlet of the oxidation catalyst. When the second washcoat region has reached its effective temperature for oxidising NO to NO₂, then the NO released by the first washcoat region will pass through the second washcoat region and be oxidised to NO₂.

There are several oxidation catalyst arrangements that facilitate the contact of the exhaust gas with the second washcoat region at an outlet end of the substrate and after the exhaust gas has been in contact with the first washcoat region. The second washcoat region is arranged or oriented to contact exhaust after it has contacted the first washcoat region when it has any one of the fourth to sixth oxidation catalyst arrangements.

Typically, the first washcoat region is arranged or oriented to contact exhaust gas before the second washcoat region. Thus, the first washcoat region may be arranged to contact exhaust gas as it enters the oxidation catalyst and the second washcoat region may be arranged to contact the exhaust gas as it leaves the oxidation catalyst. The zoned arrangement of the fourth oxidation catalyst arrangement is particularly advantageous in this respect.

In a fourth oxidation catalyst arrangement, the first washcoat region is disposed or supported upstream of the second washcoat zone. Preferably, the second washcoat region is a second washcoat zone disposed at or near an outlet end of the substrate and the first washcoat region is a first washcoat zone disposed at or near an inlet end of the substrate. When the second washcoat region comprises manganese, then the oxidation catalyst in this arrangement may show good tolerance to sulfur.

In a fifth oxidation catalyst arrangement, the first washcoat region is a first washcoat layer and the second washcoat region is a second washcoat zone. The second washcoat zone is disposed on the first washcoat layer at or near an outlet end of the substrate.

In a sixth oxidation catalyst arrangement, the first washcoat region is a first washcoat layer and the second washcoat region is a second washcoat layer. The second washcoat layer is disposed on the first washcoat layer.

In the first and fourth oxidation catalyst arrangements, the first washcoat zone may adjoin the second washcoat zone. Preferably, the first washcoat zone is contact with the second washcoat zone. When the first washcoat zone adjoins the second washcoat zone or the first washcoat zone is in contact with the second washcoat zone, then the first washcoat zone and the second washcoat zone may be disposed or supported on the substrate as a layer (e.g. a single layer). Thus, a layer (e.g. a single) may be formed on the substrate when the first and second washcoat zones adjoin or are in contact with one another. Such an arrangement may avoid problems with back pressure.

The first washcoat zone may be separate from the second washcoat zone. There may be a gap (e.g. a space) between the first washcoat zone and the second washcoat zone.

The first washcoat zone may overlap the second washcoat zone. Thus, an end portion or part of the first washcoat zone may be disposed or supported on the second washcoat zone. The first washcoat zone may completely or partly overlap the second washcoat zone. When the first washcoat zone overlaps the second washcoat zone, it is preferred that first washcoat zone only partly overlaps the second washcoat zone (i.e. the top, outermost surface of the second washcoat zone is not completely covered by the first washcoat zone).

Alternatively, the second washcoat zone may overlap the first washcoat zone. Thus, an end portion or part of the second washcoat zone may be disposed or supported on the first washcoat zone. The second washcoat zone generally only partly overlaps the first washcoat zone.

It is preferred that the first washcoat zone and the second washcoat zone do not substantially overlap.

In the second and fifth oxidation catalyst arrangements, the washcoat zone (i.e. the first or second washcoat zone) is typically disposed or supported on the washcoat layer (i.e. the first or second washcoat layer). Preferably the washcoat zone is disposed directly on to the washcoat layer (i.e. the washcoat zone is in contact with a surface of the washcoat layer).

When the washcoat zone (i.e. the first or second washcoat zone) is disposed or supported on the washcoat layer (i.e. the first or second washcoat layer), it is preferred that the entire length of the washcoat zone is disposed or supported on the washcoat layer. The length of the washcoat zone is less than the length of the washcoat layer.

In general, it is possible that both the first washcoat region and the second washcoat region are not directly disposed on the substrate (i.e. neither the first washcoat region nor the second washcoat region is in contact with a surface of the substrate).

The oxidation catalyst may further comprise a third washcoat region.

The third washcoat region typically comprises, or consists essentially of, a platinum group metal (PGM) and a support material for the PGM.

Typically, the PGM is selected from the group consisting of platinum, palladium and a combination of platinum and palladium. The PGM may be platinum. The PGM may consist essentially of platinum (e.g. the PGM is platinum only). The PGM may be palladium. The PGM may consist essentially of palladium (e.g. the PGM is palladium only). The PGM may be a combination of platinum and palladium. The PGM may consist essentially of platinum and palladium (e.g. the PGM is platinum and palladium only). It is preferred that the PGM is selected from the group consisting of platinum and a combination of platinum and palladium.

When the PGM is a combination of platinum and palladium, then the PGM may be in the form of an alloy, preferably a bimetallic alloy. Thus, the PGM may comprise, or consist essentially of, an alloy of platinum and palladium.

When the PGM is palladium or a combination of platinum and palladium, then the third washcoat region may further comprise gold. The third washcoat region may comprise a palladium-gold alloy (e.g. the palladium of the first platinum group metal may be present as an alloy with gold). Catalysts comprising gold (Au) can be prepared using the method described in WO 2012/120292.

When the third washcoat region comprises gold, such as a palladium-gold alloy, then generally the third washcoat region comprises a ratio of the total mass of palladium (Pd) to the total mass of gold (Au) of 9:1 to 1:9, preferably 5:1 to 1:5, and more preferably 2:1 to 1:2.

It is intended that the primary function of the third washcoat region is oxidising carbon monoxide (CO) and/or hydrocarbons (HCs). However, it is appreciated that in some instances the third washcoat region may also oxidise some NO to NO₂, particularly when a significant proportion of the platinum group metal (PGM) is platinum.

The support material for the PGM may be a support material as herein defined above with reference to the support material of the second washcoat region.

The third washcoat region may further comprise a hydrocarbon adsorbent material, such as hereinabove defined. The hydrocarbon adsorbent material is preferably a zeolite.

The third washcoat region may further comprise an alkaline earth metal, particularly when:
(i) the PGM is either (a) platinum or (b) platinum and palladium, and the third washcoat region comprises a total weight of platinum that is greater than or equal to the total weight of palladium (e.g. the ratio of Pt:Pd by weight is ≥ 1:1); and/or
(ii) the support material for the PGM is alumina doped with a dopant, especially alumina doped with silicon.

The third washcoat region may further comprise manganese, particularly when:
(i) the PGM is either (a) platinum or (b) platinum and palladium, and the third washcoat region comprises a total weight of platinum that is greater than or equal to the total weight of palladium (e.g. the ratio of Pt:Pd by weight is ≥ 1:1); and/or
(ii) the support material for the PGM is alumina optionally doped with a dopant, such as alumina optionally doped with silicon.

The third washcoat region may generally be a third washcoat layer or a third washcoat zone. When the third washcoat region is a third washcoat layer, then it is preferred that the third washcoat layer extends for an entire length (i.e. substantially an entire length) of the substrate, particularly the entire length of the channels of a substrate monolith. When the third washcoat region is a third washcoat zone, then typically the third washcoat zone has a length of 10 to 90 % of the length of the substrate (e.g. 10 to 45 %), preferably 15 to 75 % of the length of the substrate (e.g. 15 to 40 %), more preferably 20 to 70 % (e.g. 30 to 65 %, such as 25 to 45 %) of the length of the substrate, still more preferably 25 to 65 % (e.g. 35 to 50 %).

When the oxidation catalyst comprises a third washcoat region, then at least one of the first washcoat region and the second washcoat region may be disposed or supported on the third washcoat region.

The third washcoat region may be disposed directly on to the substrate (i.e. the third washcoat region is in contact with a surface of the substrate).

When the third washcoat region is disposed directly on to the substrate, the second washcoat region may be:
(a) disposed or supported on the third washcoat region; and/or
(b) disposed directly on to the substrate [i.e. the second washcoat region is in contact with a surface of the substrate]; and/or
(c) in contact with the third washcoat region [i.e. the second washcoat region is adjacent to, or abuts, the first washcoat region].

Additionally or alternatively, when the third washcoat region is disposed directly on to the substrate, the first washcoat region may be:
(a) disposed or supported on the third washcoat region; and/or
(b) disposed directly on to the substrate [i.e. the first washcoat region is in contact with a surface of the substrate]; and/or
(c) in contact with the third washcoat region [i.e. the first washcoat region is adjacent to, or abuts, the first washcoat region].

In addition or as an alternative to the third washcoat region being disposed directly on to the substrate, the third washcoat region may be disposed or supported on the first washcoat region and/or the second washcoat region.

In a third oxidation catalyst embodiment, the oxidation catalyst comprises a third washcoat region. The first washcoat region is a first washcoat layer, the second washcoat region is a second washcoat zone and the third washcoat region is a third washcoat zone. The second washcoat zone is disposed on the first washcoat layer and the third washcoat zone is disposed on the first washcoat layer.

It is preferred that the second washcoat zone is disposed on the first washcoat layer at or near an outlet end of the substrate, and the third washcoat zone is disposed on the first washcoat layer at or near an inlet end of the substrate.

The third washcoat zone may adjoin the second washcoat zone. Preferably, the third washcoat zone is contact with the second washcoat zone. When the third washcoat zone adjoins the second washcoat zone or the third washcoat zone is in contact with the second washcoat zone, then the third washcoat zone and the second washcoat zone may be disposed or supported on the substrate as a layer (e.g. a single layer). Thus, a layer (e.g. a single) may be formed on the substrate when the third and second washcoat zones adjoin or are in contact with one another.

The third washcoat zone may be separate from the second washcoat zone. There may be a gap (e.g. a space) between the third washcoat zone and the second washcoat zone.

The third washcoat zone may overlap the second washcoat zone. Thus, an end portion or part of the third washcoat zone may be disposed or supported on the second washcoat zone. The third washcoat zone may completely or partly overlap the second washcoat zone. When the third washcoat zone overlaps the second washcoat zone, it is preferred that third washcoat zone only partly overlaps the second washcoat zone (i.e. the top, outermost surface of the second washcoat zone is not completely covered by the first washcoat zone).

Alternatively, the second washcoat zone may overlap the third washcoat zone. Thus, an end portion or part of the second washcoat zone may be disposed or supported on the third washcoat zone. The second washcoat zone generally only partly overlaps the third washcoat zone.

It is preferred that the third washcoat zone and the second washcoat zone do not substantially overlap.

In a preferred arrangement of the third oxidation catalyst embodiment, the second washcoat zone comprises platinum and manganese, such as hereinabove defined.

The third washcoat zone preferably comprises a platinum group metal (PGM) and optionally an alkaline earth metal, such as hereinabove defined. The PGM is preferably platinum. More preferably, the PGM is platinum only (i.e. there are no other PGMs in the third washcoat zone other than platinum).

It may be preferable that the third washcoat zone further comprises a hydrocarbon adsorbent, such as a zeolite.

Substrates for supporting oxidation catalysts for treating an exhaust gas from a diesel engine are well known in the art. Methods of making washcoats and applying washcoats onto a substrate are also known in the art (see, for example, our WO 99/47260, WO 2007/077462 and WO 2011/080525).

The substrate typically has a plurality of channels (e.g. for the exhaust gas to flow through). Generally, the substrate is a ceramic material or a metallic material.

It is preferred that the substrate is made or composed of cordierite (SiO₂-Al₂O₃-MgO), silicon carbide (SiC), Fe-Cr-AI alloy, Ni-Cr-AI alloy, or a stainless steel alloy.

Typically, the substrate is a monolith (also referred to herein as a substrate monolith). Such monoliths are well-known in the art. The substrate monolith may be a flow-through monolith or a filtering monolith.

A flow-through monolith typically comprises a honeycomb monolith (e.g. a metal or ceramic honeycomb monolith) having a plurality of channels extending therethrough, which channels are open at both ends. When the substrate is a flow-through monolith, then the oxidation catalyst of the invention is typically a diesel oxidation catalyst (DOC) or is for use as a diesel oxidation catalyst (DOC).

A filtering monolith generally comprises a plurality of inlet channels and a plurality of outlet channels, wherein the inlet channels are open at an upstream end (i.e. exhaust gas inlet side) and are plugged or sealed at a downstream end (i.e. exhaust gas outlet side), the outlet channels are plugged or sealed at an upstream end and are open at a downstream end, and wherein each inlet channel is separated from an outlet channel by a porous structure. When the substrate is a filtering monolith, then the oxidation catalyst of the invention is typically a catalysed soot filter (CSF) or is for use as a catalysed soot filter (CSF).

When the monolith is a filtering monolith, it is preferred that the filtering monolith is a wall-flow filter. In a wall-flow filter, each inlet channel is alternately separated from an outlet channel by a wall of the porous structure and vice versa. It is preferred that the inlet channels and the outlet channels are arranged in a honeycomb arrangement. When there is a honeycomb arrangement, it is preferred that the channels vertically and laterally adjacent to an inlet channel are plugged at an upstream end and vice versa (i.e. the channels vertically and laterally adjacent to an outlet channel are plugged at a downstream end). When viewed from either end, the alternately plugged and open ends of the channels take on the appearance of a chessboard.

In principle, the substrate may be of any shape or size. However, the shape and size of the substrate is usually selected to optimise exposure of the catalytically active materials in the catalyst to the exhaust gas. The substrate may, for example, have a tubular, fibrous or particulate form. Examples of suitable supporting substrates include a substrate of the monolithic honeycomb cordierite type, a substrate of the monolithic honeycomb SiC type, a substrate of the layered fibre or knitted fabric type, a substrate of the foam type, a substrate of the crossflow type, a substrate of the metal wire mesh type, a substrate of the metal porous body type and a substrate of the ceramic particle type.

The substrate may be an electrically heatable substrate (i.e. the electrically heatable substrate is an electrically heating substrate, in use). When the substrate is an electrically heatable substrate, the oxidation catalyst of the invention comprises an electrical power connection, preferably at least two electrical power connections, more preferably only two electrical power connections. Each electrical power connection may be electrically connected to the electrically heatable substrate and an electrical power source. The oxidation catalyst can be heated by Joule heating, where an electric current through a resistor converts electrical energy into heat energy.

The electrically heatable substrate can be used to release any stored NOₓ from the first washcoat region. Thus, when the electrically heatable substrate is switched on, the oxidation catalyst will be heated and the temperature of the first washcoat region can be brought up to its NOₓ release temperature. Examples of suitable electrically heatable substrates are described in US 4,300,956, US 5,146,743 and US 6,513,324.

In general, the electrically heatable substrate comprises a metal. The metal may be electrically connected to the electrical power connection or electrical power connections.

Typically, the electrically heatable substrate is an electrically heatable honeycomb substrate. The electrically heatable substrate may be an electrically heating honeycomb substrate, in use.

The electrically heatable substrate may comprise an electrically heatable substrate monolith (e.g. a metal monolith). The monolith may comprise a corrugated metal sheet or foil. The corrugated metal sheet or foil may be rolled, wound or stacked. When the corrugated metal sheet is rolled or wound, then it may be rolled or wound into a coil, a spiral shape or a concentric pattern.

The metal of the electrically heatable substrate, the metal monolith and/or the corrugated metal sheet or foil may comprise an aluminium ferritic steel, such as Fecralloy™.

In general, the oxidation catalyst of the invention is for use as a diesel oxidation catalyst (DOC) or a catalysed soot filter (CSF). In practice, catalyst formulations employed in DOCs and CSFs are similar. Generally, a principle difference between a DOC and a CSF is the substrate onto which the catalyst formulation is coated and the total amount of platinum, palladium and any other catalytically active metals that are coated onto the substrate.

The invention also provides an exhaust system comprising the oxidation catalyst and an emissions control device. Examples of an emissions control device include a diesel particulate filter (DPF), a lean NOₓ trap (LNT), a lean NOₓ catalyst (LNC), a selective catalytic reduction (SCR) catalyst, a diesel oxidation catalyst (DOC), a catalysed soot filter (CSF), a selective catalytic reduction filter (SCRF™) catalyst, an ammonia slip catalyst (ASC) and combinations of two or more thereof. Such emissions control devices are all well known in the art.

Some of the aforementioned emissions control devices have filtering substrates. An emissions control device having a filtering substrate may be selected from the group consisting of a diesel particulate filter (DPF), a catalysed soot filter (CSF), and a selective catalytic reduction filter (SCRF™) catalyst.

It is preferred that the exhaust system comprises an emissions control device selected from the group consisting of a lean NOₓ trap (LNT), an ammonia slip catalyst (ASC), diesel particulate filter (DPF), a selective catalytic reduction (SCR) catalyst, a catalysed soot filter (CSF), a selective catalytic reduction filter (SCRF™) catalyst, and combinations of two or more thereof. More preferably, the emissions control device is selected from the group consisting of a diesel particulate filter (DPF), a selective catalytic reduction (SCR) catalyst, a catalysed soot filter (CSF), a selective catalytic reduction filter (SCRF™) catalyst, and combinations of two or more thereof. Even more preferably, the emissions control device is a selective catalytic reduction (SCR) catalyst or a selective catalytic reduction filter (SCRF™) catalyst.

When the exhaust system of the invention comprises an SCR catalyst or an SCRF™ catalyst, then the exhaust system may further comprise an injector for injecting a nitrogenous reductant, such as ammonia, or an ammonia precursor, such as urea or ammonium formate, preferably urea, into exhaust gas downstream of the oxidation catalyst and upstream of the SCR catalyst or the SCRF™ catalyst. Such an injector may be fluidly linked to a source (e.g. a tank) of a nitrogenous reductant precursor. Valve-controlled dosing of the precursor into the exhaust gas may be regulated by suitably programmed engine management means and closed loop or open loop feedback provided by sensors monitoring the composition of the exhaust gas. Ammonia can also be generated by heating ammonium carbamate (a solid) and the ammonia generated can be injected into the exhaust gas.

Alternatively or in addition to the injector, ammonia can be generated in situ (e.g. during rich regeneration of a LNT disposed upstream of the SCR catalyst or the SCRF™ catalyst). Thus, the exhaust system may further comprise an engine management means for enriching the exhaust gas with hydrocarbons.

The SCR catalyst or the SCRF™ catalyst may comprise a metal selected from the group consisting of at least one of Cu, Hf, La, Au, In, V, lanthanides and Group VIII transition metals (e.g. Fe), wherein the metal is supported on a refractory oxide or molecular sieve. The metal is preferably selected from Ce, Fe, Cu and combinations of any two or more thereof, more preferably the metal is Fe or Cu.

The refractory oxide for the SCR catalyst or the SCRF™ catalyst may be selected from the group consisting of Al₂O₃, TiO₂, CeO₂, SiO₂, ZrO₂ and mixed oxides containing two or more thereof. The non-zeolite catalyst can also include tungsten oxide (e.g. V₂O₅/WO₃/TiO₂, WOₓ/CeZrO₂, WOₓ/ZrO₂ or Fe/WOₓ/ZrO₂).

It is particularly preferred when an SCR catalyst, an SCRF™ catalyst or a washcoat thereof comprises at least one molecular sieve, such as an aluminosilicate zeolite or a SAPO. The at least one molecular sieve can be a small, a medium or a large pore molecular sieve. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts.

In the exhaust system of the invention, preferred molecular sieves for an SCR catalyst or an SCRF™ catalyst are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

In a first exhaust system embodiment, the exhaust system comprises the oxidation catalyst of the invention, preferably as a DOC, and a catalysed soot filter (CSF). Such an arrangement may be called a DOC/CSF. The oxidation catalyst is typically followed by (e.g. is upstream of) the catalysed soot filter (CSF). Thus, for example, an outlet of the oxidation catalyst is connected to an inlet of the catalysed soot filter.

In a second exhaust system embodiment, the exhaust system comprises a diesel oxidation catalyst and the oxidation catalyst of the invention, preferably as a catalysed soot filter (CSF). This arrangement may also be called a DOC/CSF arrangement. Typically, the diesel oxidation catalyst (DOC) is followed by (e.g. is upstream of) the oxidation catalyst of the invention. Thus, an outlet of the diesel oxidation catalyst is connected to an inlet of the oxidation catalyst of the invention.

A third exhaust system embodiment relates to an exhaust system comprising the oxidation catalyst of the invention, preferably as a DOC, a catalysed soot filter (CSF) and a selective catalytic reduction (SCR) catalyst. Such an arrangement may be called a DOC/CSF/SCR and is a preferred exhaust system for a light-duty diesel vehicle. The oxidation catalyst is typically followed by (e.g. is upstream of) the catalysed soot filter (CSF). The catalysed soot filter is typically followed by (e.g. is upstream of) the selective catalytic reduction (SCR) catalyst. A nitrogenous reductant injector may be arranged between the catalysed soot filter (CSF) and the selective catalytic reduction (SCR) catalyst. Thus, the catalysed soot filter (CSF) may be followed by (e.g. is upstream of) a nitrogenous reductant injector, and the nitrogenous reductant injector may be followed by (e.g. is upstream of) the selective catalytic reduction (SCR) catalyst.

A fourth exhaust system embodiment relates to an exhaust system comprising a diesel oxidation catalyst (DOC), the oxidation catalyst of the invention, preferably as a catalysed soot filter (CSF), and a selective catalytic reduction (SCR) catalyst. This is also a DOC/CSF/SCR arrangement. The diesel oxidation catalyst (DOC) is typically followed by (e.g. is upstream of) the oxidation catalyst of the invention. The oxidation catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the oxidation catalyst may be followed by (e.g. is upstream of) a nitrogenous reductant injector, and the nitrogenous reductant injector may be followed by (e.g. is upstream of) the selective catalytic reduction (SCR) catalyst.

In a fifth exhaust system embodiment, the exhaust system comprises the oxidation catalyst of the invention, preferably as a DOC, a selective catalytic reduction (SCR) catalyst and either a catalysed soot filter (CSF) or a diesel particulate filter (DPF). The arrangement is either a DOC/SCR/CSF or a DOC/SCR/DPF.

In the fifth exhaust system embodiment, the oxidation catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the oxidation catalyst may be followed by (e.g. is upstream of) a nitrogenous reductant injector, and the nitrogenous reductant injector may be followed by (e.g. is upstream of) the selective catalytic reduction (SCR) catalyst. The selective catalytic reduction (SCR) catalyst are followed by (e.g. are upstream of) the catalysed soot filter (CSF) or the diesel particulate filter (DPF).

A sixth exhaust system embodiment comprises the oxidation catalyst of the invention, preferably as a DOC, and a selective catalytic reduction filter (SCRF™) catalyst. Such an arrangement may be called a DOC/ SCRF™. The oxidation catalyst of the invention is typically followed by (e.g. is upstream of) the selective catalytic reduction filter (SCRF™) catalyst. A nitrogenous reductant injector may be arranged between the oxidation catalyst and the selective catalytic reduction filter (SCRF™) catalyst. Thus, the oxidation catalyst may be followed by (e.g. is upstream of) a nitrogenous reductant injector, and the nitrogenous reductant injector may be followed by (e.g. is upstream of) the selective catalytic reduction filter (SCRF™) catalyst.

In each of the third to sixth exhaust system embodiments described hereinabove, an ASC catalyst can be disposed downstream from the SCR catalyst or the SCRF™ catalyst (i.e. as a separate substrate monolith), or more preferably a zone on a downstream or trailing end of the substrate monolith comprising the SCR catalyst can be used as a support for the ASC.

The exhaust system of the invention (including the first to the sixth exhaust system embodiments) may further comprise means for introducing hydrocarbon (e.g. fuel) into the exhaust gas. The means for introducing hydrocarbon into the exhaust gas may be a hydrocarbon injector. When the exhaust system comprises a hydrocarbon injector, it is preferred that the hydrocarbon injector is downstream of the oxidation catalyst of the invention.

In general, it is preferable to avoid exposing the oxidation catalyst of the invention to a rich exhaust gas composition. The activity of the zeolite catalyst can be degraded by exposure to a rich exhaust gas composition.

It may be preferable that the exhaust system of the invention does not comprise a lean NOₓ trap (LNT), particularly a lean NOₓ trap (LNT) upstream of the oxidation catalyst, such as directly upstream of the oxidation catalyst (e.g. without an intervening emissions control device).

The NOₓ content of an exhaust gas directly from a diesel engine depends on a number of factors, such as the mode of operation of the engine, the temperature of the engine and the speed at which the engine is run. However, it is common for an engine to produce an exhaust gas where NOₓ content is 85 to 95 % (by volume) nitric oxide (NO) and 5 to 15 % (by volume) nitrogen dioxide (NO₂). The NO:NO₂ ratio is typically from 19:1 to 17:3. However, it is generally favourable for the NO₂ content to be much higher for selective catalytic reduction (SCR) catalysts to reduce NOₓ or to regenerate an emissions control device having a filtering substrate by burning off particulate matter. The PNA activity of the oxidation catalyst can be used to modulate the NOₓ content of an exhaust gas from a compression ignition engine.

The PNA activity of the oxidation catalyst of the present invention allows NOₓ, particularly NO, to be stored at low exhaust temperatures. At higher exhaust gas temperatures, the oxidation catalyst is able to oxidise NO to NO₂. It is therefore advantageous to combine the oxidation catalyst of the invention with certain types of emissions control devices as part of an exhaust system.

Another aspect of the invention relates to a vehicle or an apparatus. The vehicle or apparatus comprises a diesel engine. The diesel engine may be a homogeneous charge compression ignition (HCCI) engine, a pre-mixed charge compression ignition (PCCI) engine or a low temperature combustion (LTC) engine. It is preferred that the diesel engine is a conventional (i.e. traditional) diesel engine.

The vehicle may be a light-duty diesel vehicle (LDV), such as defined in US or European legislation. A light-duty diesel vehicle typically has a weight of < 2840 kg, more preferably a weight of < 2610 kg.

In the US, a light-duty diesel vehicle (LDV) refers to a diesel vehicle having a gross weight of ≤ 3,855 kg (≤8,500 pounds (US lbs)). In Europe, the term light-duty diesel vehicle (LDV) refers to (i) passenger vehicles comprising no more than eight seats in addition to the driver's seat and having a maximum mass not exceeding 5 tonnes, and (ii) vehicles for the carriage of goods having a maximum mass not exceeding 12 tonnes.

Alternatively, the vehicle may be a heavy-duty diesel vehicle (HDV), such as a diesel vehicle having a gross weight of > 3,855 kg (> 8,500 pounds (US lbs)), as defined in US legislation.

A a method of modulating the content of NOₓ in an exhaust gas from a diesel engine for an emissions control device is described herein. The step of (b) passing the treated exhaust gas to an emissions control device typically involves directly passing the treated exhaust gas to the emissions control device. Thus, an outlet of the oxidation catalyst is directly connected (e.g. without intermediary) to an inlet of the emissions control device.

Typically, the emissions control device is a selective catalytic reduction (SCR) catalyst, a selective catalytic reduction filter (SCRF™) catalyst, a diesel particulate filter (DPF), or a catalysed soot filter (CSF). It is preferred that the emissions control device is a selective catalytic reduction (SCR) catalyst or a selective catalytic reduction filter (SCRF™) catalyst.

Any reference to "modulating the content of NOₓ" as used herein, particularly in relation to method or use aspects described herein, refers to changing (i.e. adjusting) or maintaining, preferably changing, the ratio (in ppm or % volume, typically at the temperature and pressure of the exhaust gas) of NO:NO₂ to be within a predefined ratio at a specific exhaust gas temperature or temperature range. The predefined ratio is typically less than 17:3, preferably to be from 5:1 to 1:5, more preferably 2.5:1 to 1:2.5, and even more preferably 2:1 to 1:2 (e.g. 1.5:1 to 1:1.5 or about 1:1). The ratio of NO:NO₂ when the temperature is at the first temperature range (i.e. the temperature at which NOₓ is stored or absorbed) may be lower than the ratio at the second temperature range (i.e. the temperature at which NOₓ is released).

When the oxidation catalyst is used as a passive NOₓ absorber (PNA), the oxidation catalyst absorbs or stores NOₓ from the exhaust gas at a first temperature range and releases NOₓ at a second temperature range, wherein the second temperature range is higher the first temperature range (e.g. the midpoint of the second temperature range is higher than the midpoint of the first temperature range). It is preferable that the second temperature range does not overlap with the first temperature range. There may be a gap between the upper limit of first temperature range and the lower limit of the second temperature range.

Typically, the oxidation catalyst releases NOₓ at a temperature greater than 200 °C. This is the lower limit of the second temperature range. Preferably, the oxidation catalyst releases NOₓ at a temperature of 220 °C or above, such as 230 °C or above, 240 °C or above, 250 °C or above, or 260 °C or above.

The oxidation catalyst absorbs or stores NOₓ at a temperature of 200 °C or less. This is the upper limit of the first temperature range. Preferably, the oxidation catalyst absorbs or stores NOₓ at a temperature of 195 °C or less, such as 190 °C or less, 185 °C or less, 180 °C or less, or 175 °C or less.

The oxidation catalyst may preferentially absorb or store nitric oxide (NO). Thus, any reference to absorbing, storing or releasing NOₓ in this context may refer absorbing, storing or releasing nitric oxide (NO). Preferential absorption or storage of NO will decrease the ratio of NO:NO₂ in the exhaust gas.

In the second method aspect described herein, the step of "(a) controlling the NOₓ content of an exhaust gas by contacting the exhaust gas with an oxidation catalyst..." may further include the steps of (i) absorbing or storing NOₓ from the exhaust gas at a first temperature range, and (ii) releasing NOₓ at a second temperature range, thereby producing a treated exhaust gas. Preferably, the second temperature range is higher the first temperature range (e.g. the midpoint of the second temperature range is higher than the midpoint of the first temperature range). More preferably the second temperature range does not overlap with the first temperature range. There may be a gap between the upper limit of first temperature range and the lower limit of the second temperature range.

Typically, the second temperature range is a temperature greater than 200 °C, preferably, a temperature of 220 °C or above, such as 230 °C or above, 240 °C or above, 250 °C or above, or 260 °C or above.

The first temperature range is typically a temperature of 200 °C or less, preferably a temperature of 195 °C or less, such as 190 °C or less, 185 °C or less, 180 °C or less, or 175 °C or less.

Generally, the step of (b) passing the treated exhaust gas to an emissions control device typically involves directly passing the treated exhaust gas to the emissions control device. Thus, an outlet of the oxidation catalyst is directly connected (e.g. without intermediary) to an inlet of the emissions control device.

The use of the oxidation catalyst in the regeneration of an emissions control device having a filtering substrate (e.g. a downstream emissions control device having a filtering substrate) is described herein.

The emissions control device having a filtering substrate may be selected from the group consisting of a diesel particulate filter (DPF), a catalysed soot filter (CSF), a selective catalytic reduction filter (SCRF™) catalyst and a combination of two or more thereof.

When the oxidation catalyst of the invention is used in the regeneration of an emissions control device having a filtering substrate, it may be used in the active or passive regeneration of the emissions control device, preferably the active regeneration.

The oxidation catalyst may be used to regenerate the emissions control device having a filtering substrate at a temperature of at least 220°C, preferably at least 240°C, more preferably at least 260 °C, still more preferably at least 280 °C, by oxidising nitric oxide (NO) to nitrogen dioxide (NO₂).

### DEFINTIONS

The term "washcoat" is well known in the art and refers to an adherent coating that is applied to a substrate usually during production of a catalyst.

The term "washcoat region" as used herein refers to an area of washcoat on a substrate. A "washcoat region" can, for example, be disposed or supported on a substrate as a "layer" or a "zone". The area or arrangement of a washcoat on a substrate is generally controlled during the process of applying the washcoat to the substrate. The "washcoat region" typically has distinct boundaries or edges (i.e. it is possible to distinguish one washcoat region from another washcoat region using conventional analytical techniques).

Typically, the "washcoat region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "washcoat region" has a substantially uniform composition (i.e. there is no substantial difference in the composition of the washcoat when comparing one part of the washcoat region with another part of that washcoat region). Substantially uniform composition in this context refers to a material (e.g. washcoat region) where the difference in composition when comparing one part of the washcoat region with another part of the washcoat region is 5% or less, usually 2.5% or less, and most commonly 1% or less.

The term "washcoat zone" as used herein refers to a washcoat region having a length that is less than the total length of the substrate, such as ≤ 75 % of the total length of the substrate. A "washcoat zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "washcoat zone disposed at an inlet end of the substrate" used herein refers to a washcoat zone disposed or supported on a substrate where the washcoat zone is nearer to an inlet end of the substrate than the washcoat zone is to an outlet end of the substrate. Thus, the midpoint of the washcoat zone (i.e. at half its length) is nearer to the inlet end of the substrate than the midpoint is to the outlet end of the substrate. Similarly, any reference to a "washcoat zone disposed at an outlet end of the substrate" used herein refers to a washcoat zone disposed or supported on a substrate where the washcoat zone is nearer to an outlet end of the substrate than the washcoat zone is to an inlet end of the substrate. Thus, the midpoint of the washcoat zone (i.e. at half its length) is nearer to the outlet end of the substrate than the midpoint is to the inlet end of the substrate.

When the substrate is a wall-flow filter, then generally any reference to a "washcoat zone disposed at an inlet end of the substrate" refers to a washcoat zone disposed or supported on the substrate that is:
(a) nearer to an inlet end (e.g. open end) of an inlet channel of the substrate than the washcoat zone is to a closed end (e.g. blocked or plugged end) of the inlet channel, and/or
(b) nearer to a closed end (e.g. blocked or plugged end) of an outlet channel of the substrate than the washcoat zone is to an outlet end (e.g. open end) of the outlet channel.

Thus, the midpoint of the washcoat zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "washcoat zone disposed at an outlet end of the substrate" when the substrate is a wall-flow filter refers to a washcoat zone disposed or supported on the substrate that is:
(a) nearer to an outlet end (e.g. an open end) of an outlet channel of the substrate than the washcoat zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the washcoat zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A washcoat zone may satisfy both (a) and (b) when the washcoat is present in the wall of the wall-flow filter (i.e. the washcoat zone is in-wall).

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "adsorber" as used herein, particularly in the context of a NOₓ adsorber, should not be construed as being limited to the storage or trapping of a chemical entity (e.g. NOₓ) only by means of adsorption. The term "adsorber" used herein is synonymous with "absorber".

The term "mixed oxide" as used herein generally refers to a mixture of oxides in a single phase, as is conventionally known in the art. The term "composite oxide" as used herein generally refers to a composition of oxides having more than one phase, as is conventionally known in the art.

Any reference to washcoat zones that do not "substantially overlap" as used herein refers an overlap (i.e. between the ends of neighbouring zones on a substrate) of less than 10 % of the length of the substrate, preferably less 7.5 % of the length of the substrate, more preferably less than 5 % of the length of the substrate, particularly less than 2.5 % of the length of the substrate, even more preferably less than 1 % of the length of the substrate, and most preferably there is no overlap.

The expression "consist essentially" as used herein limits the scope of a feature to include the specified materials, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a washcoat region, a washcoat layer or a washcoat zone, means that the material in a minor amount, such as ≤ 5 % by weight, preferably ≤ 2 % by weight, more preferably ≤ 1 % by weight. The expression "substantially free of" embraces the expression "does not comprise".

Any reference to an amount of dopant, particularly a total amount, expressed as a % by weight as used herein refers to the weight of the support material or the refractory metal oxide thereof.

### EXAMPLES

The invention will now be illustrated by the following non-limiting examples.

### Example 1

Pd nitrate was added to slurry of small pore zeolite with CHA structure and was stirred. The slurry was applied to a cordierite flow through monolith having 62 cells cm⁻² (400 cells per square inch) structure using established coating techniques. The coating was dried and calcined at 500°C. A coating containing a Pd-exchanged zeolite was obtained. The Pd loading of this coating was 2.83 g L⁻¹ (80 g ft⁻³).

A second slurry was prepared using a silica-alumina powder milled to a d₉₀ < 20 micron. Soluble platinum salt was added and the mixture was stirred to homogenise. The slurry was applied to the outlet end of the flow through monolith using established coating techniques. The coating was then dried.

A third slurry was prepared using a silica-alumina powder milled to a d₉₀ < 20 micron. Appropriate amounts of soluble platinum and palladium salts were added followed by beta zeolite such that the slurry comprised 75% silica-alumina and 25% zeolite by mass. The slurry was then stirred to homogenise. The resulting washcoat was applied to the inlet channels of the flow through monolith using established coating techniques. The part was then dried and calcined at 500°C. The Pt loading of the finished part was 1.59 g L⁻¹ (45 g ft⁻³) and the Pd loading was 3.35 g L⁻¹ (95 g ft⁻³).

### Reference Example 2

Pd nitrate was added to slurry of medium pore zeolite with MFI structure and was stirred. The slurry was applied to a cordierite flow through monolith having 62 cells cm⁻² (400 cells per square inch) structure using established coating techniques. The coating was dried and calcined at 500°C. A coating containing a Pd-exchanged zeolite was obtained. The Pd loading of this coating was 2.83 g L⁻¹ (80 g ft⁻³).

A second slurry was prepared using a silica-alumina powder milled to a d₉₀ < 20 micron. Soluble platinum salt was added and the mixture was stirred to homogenise. The slurry was applied to the outlet end of the flow through monolith using established coating techniques. The coating was then dried.

A third slurry was prepared using a silica-alumina powder milled to a d₉₀ < 20 micron. Appropriate amounts of soluble platinum and palladium salts were added followed by beta zeolite such that the slurry comprised 75% silica-alumina and 25% zeolite by mass. The slurry was then stirred to homogenise. The resulting washcoat was applied to the inlet channels of the flow through monolith using established coating techniques. The part was then dried and calcined at 500°C. The Pt loading of the finished part was 1.59 g L⁻¹ (45 g ft⁻³) and the Pd loading was 3.35 g L⁻¹ (95 g ft⁻³).

### Experimental Results

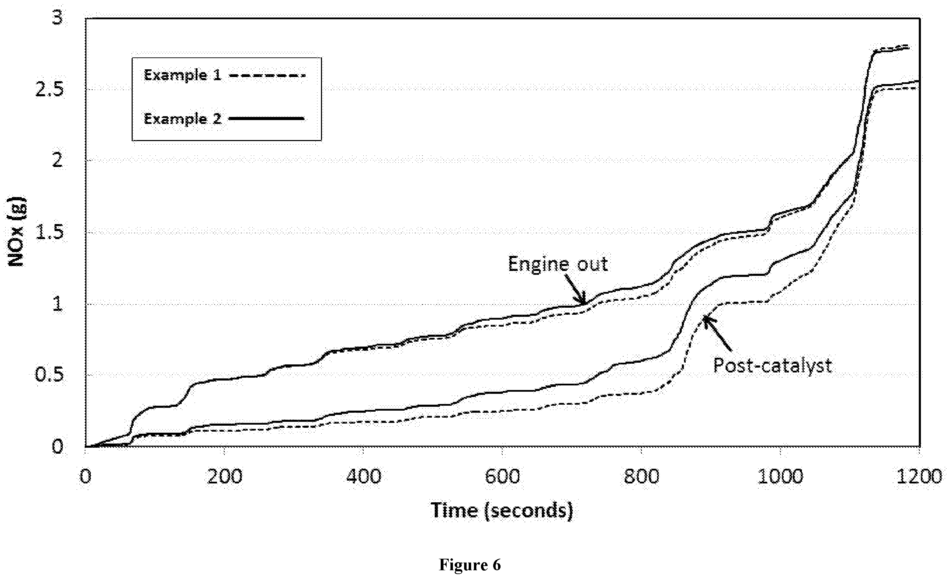

Catalyst examples 1 and 2 were hydrothermally aged at 750°C for 16 hours with 10% water. They were performance tested over a simulated MVEG-B emissions cycle using a 1.6 litre bench mounted diesel engine. Emissions were measured pre- and post-catalyst. The cumulative NOₓ pollutant emissions are shown in Figure 6. The difference between the engine out (pre-catalyst) NOₓ emissions and the post-catalyst NOₓ emissions indicates the amount of NOₓ stored on the catalyst. The quantity of NOₓ stored reaches a maximum at between 800 and 850 seconds. The exhaust gas temperature increases after 850 seconds and difference between the engine out and post-catalyst NOₓ decreases. In this temperature region NOₓ is being thermally released from the catalyst. Example 1 which comprises a small pore CHA structured zeolite has a larger capacity to store NOₓ than Reference Example 2 which comprises a medium pore MFI structured zeolite.

### Example 3

Pd nitrate was added to slurry of small pore zeolite with CHA structure and was stirred. The slurry was applied to a cordierite flow through monolith having 62 cells cm⁻² (400 cells per square inch) structure using established coating techniques. The coating was dried and calcined at 500°C. A coating containing a Pd-exchanged zeolite was obtained. The Pd loading of this coating was 2.12 g L⁻¹ (60 g ft⁻³).

A second slurry was prepared using a silica-alumina powder milled to a d₉₀ < 20 micron. Soluble platinum salt was added and the mixture was stirred to homogenise. The slurry was applied to the outlet end of the flow through monolith using established coating techniques. The coating was then dried.

A third slurry was prepared using a silica-alumina powder milled to a d₉₀ < 20 micron. Barium acetate was added to the slurry followed by appropriate amounts of soluble platinum and palladium salts. Beta zeolite was added such that the slurry comprised 71% silica doped alumina and 29% zeolite by mass. The slurry was then stirred to homogenise. The resulting washcoat was applied to the inlet channels of the flow through monolith using established coating techniques. The part was then dried and calcined at 500°C. The Pt loading of the finished part was 1.41 g L⁻¹ (40 g ft⁻³) and the Pd loading was 2.47 g L⁻¹ (70 g ft⁻³).

### Reference Example 4

Palladium nitrate was added to a slurry of ceria in water. The slurry containing palladium nitrate was stirred to homogenise then applied to a cordierite flow through monolith having 62 cells cm⁻² (400 cells per square inch) structure using established coating techniques. The coating was dried and calcined at 500 °C. The Pd loading of this coating was 2.12 g L⁻¹ (60 g ft⁻³).

A second slurry was prepared by taking alumina powder milled to a d₉₀ < 20 micron. Appropriate amounts of soluble platinum and palladium salts were added followed by beta zeolite such that the slurry comprised 77% alumina and 23% zeolite by mass. The resulting slurry was stirred to homogenise. This second slurry was applied to the flow through monolith using established coating techniques to form a second layer. The part was dried and calcined at 500 °C. The Pt loading of the finished part was 1.48 g L⁻¹ (42 g ft⁻³) and the Pd loading was 2.33 g L⁻¹ (66 g ft⁻³).

### Experimental Results

### Measurement of NO oxidation

Core samples were taken from the catalyst Examples 3 and 4. Both cores were hydrothermally aged in an oven at 800°C for 16 hours in 10% water.

The catalytic activity was determined using a synthetic gas bench activity test (SCAT). The aged cores were tested in a simulated catalyst activity testing (SCAT) gas apparatus using the inlet gas mixtures in Table 1. In each case the balance is nitrogen.

**Table 1**

| | |
|---|---|
| CO | 1500 ppm |
| HC (as C₁) | 430 ppm |
| NO | 100 ppm |
| CO₂ | 4% |
| H₂O | 4% |
| O₂ | 14% |
| Space velocity | 55000/hour |

### Results

The results from the SCATs are shown in Tables 2 below.

**Table 2**

| Example No. | NO oxidation at 250°C (%) |
|---|---|
| 3 | 47 |
| 4 (Reference) | 29 |

The results in Table 2 show the NO oxidation performance of examples 3 and 4 at 250°C. Reference Example 4 is a comparative PNA coating comprising Pd on a ceria support. Example 3 according to the invention shows a higher level of NO oxidation at 250°C than Reference Example 4.

## Claims

1. An oxidation catalyst for treating an exhaust gas from a diesel engine, which oxidation catalyst comprises:
a first washcoat region for adsorbing NOₓ, wherein the first washcoat region comprises a zeolite catalyst, wherein the zeolite catalyst comprises a noble metal loaded onto or supported on a zeolite by ion-exchange, wherein the noble metal comprises palladium (Pd), the zeolite is a small pore zeolite, and wherein the zeolite catalyst does not comprise a base metal selected from the group consisting of iron (Fe), copper (Cu), manganese (Mn), chromium (Cr), cobalt (Co), nickel (Ni), tin (Sn) and mixtures of two or more thereof;
a second washcoat region for oxidising nitric oxide (NO), wherein the second washcoat region comprises platinum (Pt) and a support material, wherein the platinum (Pt) is disposed or supported on the support material, and wherein the support material comprises a refractory metal oxide; and
a substrate having an inlet end and an outlet end, wherein the first washcoat region and the second washcoat region are disposed or supported on the substrate.

2. An oxidation catalyst according to claim 1, wherein the zeolite catalyst comprises palladium as the only noble metal.

3. An oxidation catalyst according to claim 1 or claim 2, wherein the zeolite catalyst has at least 1 % by weight of the noble metal located inside pores of the zeolite.

4. An oxidation catalyst according to any one of the preceding claims, wherein the zeolite is a small pore zeolite having a Framework Type selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON and a mixture or intergrowth of any two or more thereof.

5. An oxidation catalyst according to claim 4, wherein the small pore zeolite has a Framework Type that is AEI or CHA.

6. An oxidation catalyst according to any one of the preceding claims, wherein the zeolite is an aluminosilicate zeolite, and wherein the zeolite has a silica to alumina molar ratio of 10 to 200.

7. An oxidation catalyst according to any one of the preceding claims, wherein the second washcoat region comprises platinum (Pt) as the only platinum group metal.

8. An oxidation catalyst according to any one of the preceding claims, wherein the support material comprises a refractory metal oxide selected from the group consisting of alumina, silica, titania, zirconia, ceria and a mixed or composite oxide of two or more thereof.

9. An oxidation catalyst according to claim 8, wherein the support material comprises alumina doped with a dopant.

10. An oxidation catalyst according to any one of the preceding claims, wherein the first washcoat region is arranged to contact the exhaust gas at the outlet end of the substrate and after contact of the exhaust gas with the second washcoat region, and wherein either:
(a) the first washcoat region is a first washcoat zone disposed at an outlet end of the substrate and the second washcoat region is a second washcoat zone disposed at an inlet end of the substrate;
(b) the second washcoat region is a second washcoat layer and the first washcoat region is a first washcoat zone, and wherein the first washcoat zone is disposed on the second washcoat layer at an outlet end of the substrate; or
(c) the second washcoat region is a second washcoat layer and the first washcoat region is a first washcoat layer, and wherein the second washcoat layer is disposed on the first washcoat layer.

11. An oxidation catalyst according to any one of claims 1 to 9, wherein the second washcoat region is arranged to contact the exhaust gas at or near the outlet end of the substrate and after contact of the exhaust gas with the first washcoat region, and wherein either:
(a) the second washcoat region is a second washcoat zone disposed at an outlet end of the substrate and the first washcoat region is a first washcoat zone disposed at an inlet end of the substrate;
(b) the first washcoat region is a first washcoat layer and the second washcoat region is a second washcoat zone, and wherein the second washcoat zone is disposed on the first washcoat layer at an outlet end of the substrate; or
(c) the first washcoat region is a first washcoat layer and the second washcoat region is a second washcoat layer, and wherein the second washcoat layer is disposed on the first washcoat layer.

12. An oxidation catalyst according to any one of the preceding claims, wherein the substrate is a through-flow substrate.

13. An exhaust system comprising an oxidation catalyst as defined in any one of claims 1 to 12 and an emissions control device.

14. An exhaust system according to claim 13, wherein the emissions control device is selected from the group consisting of a lean NOₓ trap (LNT), an ammonia slip catalyst (ASC), diesel particulate filter (DPF), a selective catalytic reduction (SCR) catalyst, a catalysed soot filter (CSF), a selective catalytic reduction filter catalyst, and combinations of two or more thereof.

15. A vehicle or apparatus comprising a diesel engine and an oxidation catalyst as defined in any one of claims 1 to 12 or an exhaust system as defined in claim 13 or claim 14.

## Patentansprüche

1. Oxidationskatalysator zur Behandlung eines Abgases von einem Dieselmotor, wobei dieser Oxidationskatalysator Folgendes umfasst:
eine erste Washcoat-Region zum Adsorbieren von NOₓ, wobei die erste Washcoat-Region einen Zeolithkatalysator umfasst, wobei der Zeolithkatalysator ein Edelmetall umfasst, das durch lonenaustausch auf einen Zeolithen geladen oder auf diesem geträgert wird, wobei das Edelmetall Palladium (Pd) umfasst, der Zeolith ein kleinporiger Zeolith ist und wobei der Zeolithkatalysator kein Nichtedelmetall umfasst, das aus der Gruppe bestehend aus Eisen (Fe), Kupfer (Cu), Mangan (Mn), Chrom (Cr), Kobalt (Co), Nickel (Ni), Zinn (Sn) und Gemischen von zwei oder mehr davon ausgewählt ist;
eine zweite Washcoat-Region zum Oxidieren von Stickoxid (NO), wobei die zweite Washcoat-Region Platin (Pt) und ein Trägermaterial umfasst, wobei das Platin (Pt) auf dem Trägermaterial angeordnet oder geträgert ist und wobei das Trägermaterial ein hochschmelzendes Metalloxid umfasst; und
ein Substrat mit einem Einlassende und einem Auslassende, wobei die erste Washcoat-Region und die zweite Washcoat-Region auf dem Substrat angeordnet oder geträgert sind.

2. Oxidationskatalysator nach Anspruch 1, wobei der Zeolithkatalysator Palladium als das einzige Edelmetall umfasst.

3. Oxidationskatalysator nach Anspruch 1 oder 2, wobei der Zeolithkatalysator mindestens 1 Gew.-% des Edelmetalls im Inneren der Poren des Zeolithen befindlich aufweist.

4. Oxidationskatalysator nach einem der vorhergehenden Ansprüche, wobei der Zeolith ein kleinporiger Zeolith mit einem Gerüsttyp ist, der aus der Gruppe bestehend aus ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON und einem Gemisch oder einer Verwachsung von beliebigen zwei oder mehr davon ausgewählt ist.

5. Oxidationskatalysator nach Anspruch 4, wobei der kleinporige Zeolith einen Gerüsttyp aufweist, der AEI oder CHA ist.

6. Oxidationskatalysator nach einem der vorhergehenden Ansprüche, wobei der Zeolith ein Alumosilikat-Zeolith ist und wobei der Zeolith ein Molverhältnis von Siliciumdioxid zu Aluminiumoxid von 10 zu 200 aufweist.

7. Oxidationskatalysator nach einem der vorhergehenden Ansprüche, wobei die zweite Washcoat-Region Platin (Pt) als das einzige Platinmetall umfasst.

8. Oxidationskatalysator nach einem der vorhergehenden Ansprüche, wobei das Trägermaterial ein hochschmelzendes Metalloxid umfasst, das aus der Gruppe bestehend aus Aluminiumoxid, Siliciumdioxid, Titandioxid, Zirconiumdioxid, Cerdioxid und einem Misch- oder Verbundoxid von zwei oder mehr davon ausgewählt ist.

9. Oxidationskatalysator nach Anspruch 8, wobei das Trägermaterial Aluminiumoxid, das mit einer Dotiersubstanz dotiert ist, umfasst.

10. Oxidationskatalysator nach einem der vorhergehenden Ansprüche, wobei die erste Washcoat-Region dazu eingerichtet ist, einen Kontakt mit dem Abgas am Auslassende des Substrats und nach Kontakt des Abgases mit der zweiten Washcoat-Region herzustellen, und wobei entweder:
(a) die erste Washcoat-Region eine erste Washcoat-Zone ist, die an einem Auslassende des Substrats angeordnet ist, und die zweite Washcoat-Region eine zweite Washcoat-Zone ist, die an einem Einlassende des Substrats angeordnet ist;
(b) die zweite Washcoat-Region eine zweite Washcoat-Schicht ist und die erste Washcoat-Region eine erste Washcoat-Zone ist und wobei die erste Washcoat-Zone auf der zweiten Washcoat-Schicht an einem Auslassende des Substrats angeordnet ist; oder
(c) die zweite Washcoat-Region eine zweite Washcoat-Schicht ist und die erste Washcoat-Region eine erste Washcoat-Schicht ist und wobei die zweite Washcoat-Schicht auf der ersten Washcoat-Schicht angeordnet ist.

11. Oxidationskatalysator nach einem der Ansprüche 1 bis 9, wobei die zweite Washcoat-Region dazu eingerichtet ist, einen Kontakt mit dem Abgas am oder nahe dem Auslassende des Substrats und nach Kontakt des Abgases mit der ersten Washcoat-Region herzustellen, und wobei entweder:
(a) die zweite Washcoat-Region eine zweite Washcoat-Zone ist, die an einem Auslassende des Substrats angeordnet ist, und die erste Washcoat-Region eine erste Washcoat-Zone ist, die an einem Einlassende des Substrats angeordnet ist;
(b) die erste Washcoat-Region eine erste Washcoat-Schicht ist und die zweite Washcoat-Region eine zweite Washcoat-Zone ist und wobei die zweite Washcoat-Zone auf der ersten Washcoat-Schicht an einem Auslassende des Substrats angeordnet ist; oder
(c) die erste Washcoat-Region eine erste Washcoat-Schicht ist und die zweite Washcoat-Region eine zweite Washcoat-Schicht ist und wobei die zweite Washcoat-Schicht auf der ersten Washcoat-Schicht angeordnet ist.

12. Oxidationskatalysator nach einem der vorhergehenden Ansprüche, wobei das Substrat ein Durchflusssubstrat ist.

13. Abgasanlage, die einen wie in einem der Ansprüche 1 bis 12 definierten Oxidationskatalysator und eine Emissionskontrollvorrichtung umfasst.

14. Abgasanlage nach Anspruch 13, wobei die Emissionskontrollvorrichtung aus der Gruppe bestehend aus einem NOₓ-Speicherkatalysator (LNT), einem Ammoniakschlupfkatalysator (ASC), einem Dieselpartikelfilter (DPF), einem Katalysator mit selektiver katalytischer Reduktion (SCR-Katalysator), einem katalytischen Rußfilter (CSF), einem Filterkatalysator mit selektiver katalytischer Reduktion und Kombinationen von zwei oder mehr davon ausgewählt ist.

15. Fahrzeug oder Apparatur, das bzw. die einen Dieselmotor und einen wie in einem der Ansprüche 1 bis 12 definierten Oxidationskatalysator oder eine wie in Anspruch 13 oder 14 definierte Abgasanlage umfasst.

## Revendications

1. Catalyseur d'oxydation pour le traitement d'un gaz d'échappement provenant d'un moteur diesel, lequel catalyseur d'oxydation comprend :
une première région de revêtement d'imprégnateur pour absorber les NOx, la première région de revêtement d'imprégnateur comprenant un catalyseur zéolithique, le catalyseur zéolithique comprenant un métal noble chargé ou supporté sur une zéolithe par échange ionique, le métal noble comprenant du palladium (Pd), la zéolithe étant une zéolithe à petits pores et le catalyseur zéolithique ne comprenant pas de métal de base choisi dans le groupe constitué par le fer (Fe), le cuivre (Cu), le manganèse (Mn), le chrome (Cr), le cobalt (Co), le nickel (Ni), l'étain (Sn) et les mélanges de deux ou plus de ceux-ci ;
une deuxième région de revêtement d'imprégnateur pour oxyder l'oxyde nitrique (NO), la deuxième région de revêtement d'imprégnateur comprenant du platine (Pt) et un matériau support, le platine (Pt) étant disposé ou supporté sur le matériau support et le matériau support comprenant un oxyde métallique réfractaire ; et
un substrat présentant une extrémité d'entrée et une extrémité de sortie, la première région de revêtement d'imprégnateur et la deuxième région de revêtement d'imprégnateur étant disposées ou supportées sur le substrat.

2. Catalyseur d'oxydation selon la revendication 1, le catalyseur zéolithique comprenant du palladium comme unique métal noble.

3. Catalyseur d'oxydation selon la revendication 1 ou la revendication 2, le catalyseur zéolithique présentant au moins 1% en poids du métal noble situé à l'intérieur des pores de la zéolithe.

4. Catalyseur d'oxydation selon l'une quelconque des revendications précédentes, la zéolithe étant une zéolithe à petits pores présentant un type de structure choisi dans le groupe constitué par ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON et un mélange ou une intercroissance de deux quelconques ou plus de ceux-ci.

5. Catalyseur d'oxydation selon la revendication 4, la zéolithe à petits pores présentant un type de structure qui est AEI ou CHA.

6. Catalyseur d'oxydation selon l'une quelconque des revendications précédentes, la zéolithe étant une zéolithe d'aluminosilicate et la zéolithe présentant un rapport molaire de silice à alumine de 10 à 200.

7. Catalyseur d'oxydation selon l'une quelconque des revendications précédentes, la deuxième région de revêtement d'imprégnateur comprenant du platine (Pt) comme unique métal du groupe du platine.

8. Catalyseur d'oxydation selon l'une quelconque des revendications précédentes, le matériau support comprenant un oxyde métallique réfractaire choisi dans le groupe constitué par l'alumine, la silice, l'oxyde de titane, l'oxyde de zirconium, l'oxyde de cérium et un oxyde mixte ou composite de deux ou plus de ceux-ci.

9. Catalyseur d'oxydation selon la revendication 8, le matériau support comprenant de l'alumine dopée par un dopant.

10. Catalyseur d'oxydation selon l'une quelconque des revendications précédentes, la première région de revêtement d'imprégnateur étant agencée pour entrer en contact avec le gaz d'échappement au niveau de l'extrémité de sortie du substrat et après contact du gaz d'échappement avec la deuxième région de revêtement d'imprégnateur et :
(a) soit la première région de revêtement d'imprégnateur étant une première zone de revêtement d'imprégnateur disposée au niveau d'une extrémité de sortie du substrat et la deuxième région de revêtement d'imprégnateur étant une deuxième zone de revêtement d'imprégnateur disposée au niveau d'une extrémité d'entrée du substrat ;
(b) soit la deuxième région de revêtement d'imprégnateur étant une deuxième couche de revêtement d'imprégnateur et la première région de revêtement d'imprégnateur étant une première zone de revêtement d'imprégnateur et la première zone de revêtement d'imprégnateur étant disposée sur la deuxième couche de revêtement d'imprégnateur au niveau d'une extrémité de sortie du substrat ;
(c) soit la deuxième région de revêtement d'imprégnateur étant une deuxième couche de revêtement d'imprégnateur et la première région de revêtement d'imprégnateur étant une première couche de revêtement d'imprégnateur et la deuxième couche de revêtement d'imprégnateur étant disposée sur la première couche de revêtement d'imprégnateur.

11. Catalyseur d'oxydation selon l'une quelconque des revendications 1 à 9, la deuxième région de revêtement d'imprégnateur étant agencée pour entrer en contact avec le gaz d'échappement au niveau ou à proximité de l'extrémité de sortie du substrat et après contact du gaz d'échappement avec la première région de revêtement d'imprégnateur et :
(a) soit la deuxième région de revêtement d'imprégnateur étant une deuxième zone de revêtement d'imprégnateur disposée au niveau d'une extrémité de sortie du substrat et la première région de revêtement d'imprégnateur étant une première zone de revêtement d'imprégnateur disposée au niveau d'une extrémité d'entrée du substrat ;
(b) soit la première région de revêtement d'imprégnateur étant une première couche de revêtement d'imprégnateur et la deuxième région de revêtement d'imprégnateur étant une deuxième zone de revêtement d'imprégnateur et la deuxième zone de revêtement d'imprégnateur étant disposée sur la première couche de revêtement d'imprégnateur au niveau d'une extrémité de sortie du substrat ;
(c) soit la première région de revêtement d'imprégnateur étant une première couche de revêtement d'imprégnateur et la deuxième région de revêtement d'imprégnateur étant une deuxième couche de revêtement d'imprégnateur et la deuxième couche de revêtement d'imprégnateur étant disposée sur la première couche de revêtement d'imprégnateur.

12. Catalyseur d'oxydation selon l'une quelconque des revendications précédentes, le substrat étant un substrat à écoulement continu.

13. Système d'échappement comprenant un catalyseur d'oxydation tel que défini dans l'une quelconque des revendications 1 à 12 et un dispositif de régulation des émissions.

14. Système d'échappement selon la revendication 13, le dispositif de régulation des émissions étant choisi dans le groupe constitué par un piège à NOₓ pauvre (LNT), un catalyseur contre le dégagement d'ammoniac (ASC), un filtre à particules diesel (DPF), un catalyseur de réduction catalytique sélective (SCR), un filtre à suie catalysé (CFS), un catalyseur de réduction catalytique sélective à filtre et des combinaisons de deux ou plus de ceux-ci.

15. Véhicule ou appareil comprenant un moteur diesel et un catalyseur d'oxydation tel que défini dans l'une quelconque des revendications 1 à 12 ou un système d'échappement tel que défini dans la revendication 13 ou la revendication 14.
